# EUROPEAN PATENT SPECIFICATION

(11) **EP 0 985 298 B1**
(45) Date of publication and mention of the grant of the patent: **30.03.2011**
(21) Application number: 98923848.0
(22) Date of filing: 28.05.1998
(51) Int. Cl.: H04L 12/44

(54) **METHOD AND APPARATUS FOR PROVIDING SECURITY IN A STAR NETWORK CONNECTION USING PUBLIC KEY CRYPTOGRAPHY**
VERFAHREN UND SYSTEM ZUM SICHERN EINER STERNNETZVERBINDUNG UNTER VERWENDUNG VON PUBLIC KEY KRYPTOGRAPHIE
PROCEDE ET APPAREIL POUR LA SECURITE D'UNE CONNEXION PAR RESEAU DE TYPE STAR AVEC UTILISATION D'UN CRYPTAGE A CLEF PUBLIQUE

(30) Priority: 30.05.1997 US 866818; 28.10.1997 US 955869
(43) Date of publication of application: 15.03.2000
(73) Proprietor: Hewlett-Packard Company, Palo Alto, CA 94304 (US)
(72) Inventor: JAIN, Vipin, Kumar, Santa Clara, CA 95051 (US); NESSETT, Danny, M., Fremont, CA 94555 (US); SHERER, William, Paul, Danville, CA 94506 (US)
(74) Representative: Clarke, Alison Clare
(86) International application number: PCT/US1998/010993
(87) International publication number: WO 1998/054869

(56) References cited:
- US-A- 4 896 319
- US-A- 5 537 099

## Description

### BACKGROUND OF THE INVENTION

This application claims priority from U.S. patent application 08/866,818 entitled METHOD AND APPARATUS FOR PROVIDING SECURITY IN A STAR OR HUB NETWORK CONNECTION filed in the U.S. May 30, 1997 (9764-92) and from its continuation in part U.S. patent application 08/955,869 entitled METHOD AND APPARATUS FOR PROVIDING SECURITY IN A STAR NETWORK CONNECTION USING PUBLIC KEY CRYPTOGRAPHY filed in the U.S. October 28, 1997 (9764-96). Related disclosure is discussed in co-assigned patent application serial number 08/733,358, filed 10/17/96, which is a continuation of U.S. Patent 5,568,469, filed 9/27/94 and issued 10/22/96.

The current invention relates to the field of electronic circuits. More particularly, the current invention relates to improvements in networked computer environments and has particular applications to the transmission of information between digital devices over a communications medium. A wide variety of computer systems and networks exist, each having variations in particular implementations. The present invention will be described with reference to particular types of systems for clarity but this should not be taken to limit the invention, and it will be apparent to those of skill in the art that the invention has applications in many different types of computer systems. The invention therefore should not be seen as limited except as specifically herein provided.

### Networking Devices Standards

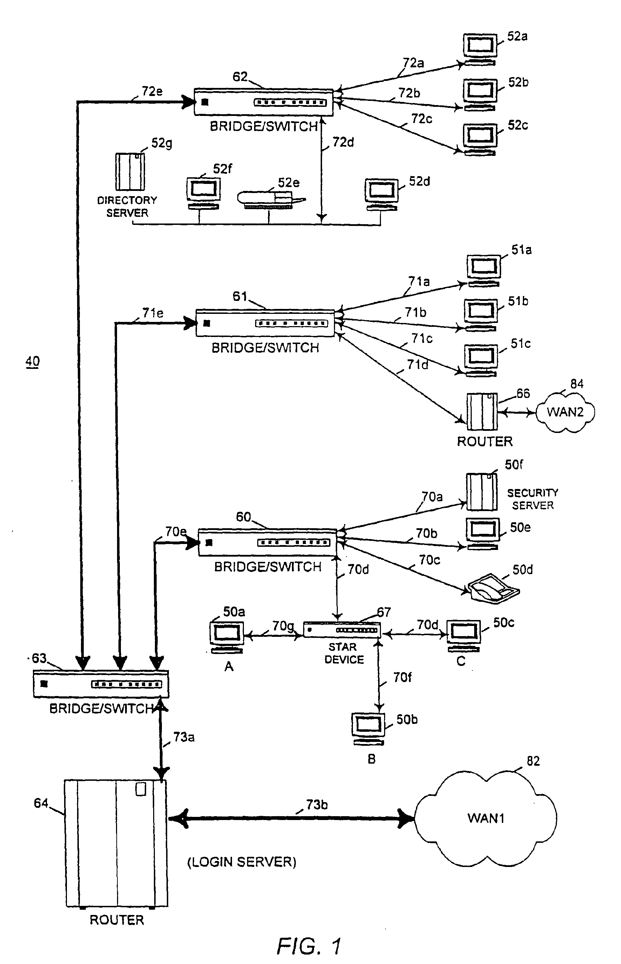

This specification presumes familiarity with the general concepts, protocols, and devices currently used in LAN networking and WAN internetworking applications such as, for example, the IEEE 802 and ISO 8802 protocol suites and other series of documents released by the Internet Engineering Task Force that are publicly available and discussed in more detail in the above-referenced patent applications and will not be fully discussed here. Fig. 1

Fig. 1 illustrates a local area network (LAN) 40 of a type that might be used today in a moderate-sized office or academic environment and as an example for discussion purposes of a system in which the present invention may be effectively employed. LANs are arrangements of various hardware and software elements that operate together to allow a number of digital devices to exchange data within the LAN and also may include internet connections to external wide area networks (WANs) such as WANs 82 and 84. Typical modem LANs such as 40 are comprised of one to many LAN intermediate systems (ISs) such as ISs 60-62 and 67 that are responsible for data transmission throughout the LAN and a number of end systems (ESs) such as ESs 50a-e, 51a-c, and 52a-f, that can represent end user equipment or other end nodes. Fig. 1 also shows a security server 50f and a directory server 52g which, according to embodiments of the invention as described below, are used by a star device to authenticate new connections. The ESs may be familiar end-user data processing equipment such as personal computers, workstations, and printers and additionally may be digital devices such as digital telephones or real-time video displays. Different types of ESs can operate together on the same LAN. In one type of LAN, LAN ISs 60-61 are referred to as *bridges* and WAN ISs 64 and 66 are referred to as *routers*, and IS 67 is referred to as a *repeater*, however many different LAN configurations are possible, and the invention is not limited in application to the network shown in Fig. 1.

The LAN shown in Fig. 1 has segments 70a-g, 71 a-e, and 72a-e, and 73a. A segment is generally a single interconnected medium, such as a length of contiguous wire, optical fiber, or coaxial cable or a particular frequency band. A segment may connect just two devices, such as segment 70a (also referred to as a point-to-point connection or a star connection), or a segment such as 72d may connect a number of devices using a carrier sense multiple access/collision detect (CSMA/CD) protocol or other multiple access protocol such as a token bus or token ring. A signal transmitted on a single segment, such as 72d, is simultaneously heard by all of the ESs and ISs connected to that segment.

LANs also may contain a number of repeaters, such as repeater 67. A repeater generally physically repeats out of each of its ports all data received on any one port, such that the network behavior perceived by ESs 50a-c and the port of IS 60 connected to 67 is identical to the behavior these ports would perceive if they were wired on the same segment such as 52d-g and the corresponding port of 62. Repeaters configured in a star topology, such as 67, are also referred to as *hub* repeaters. (The terms *hub* or *star* is a term used in networking that sometimes indicates either a switch/bridge layer 2 device or a repeater layer 1 device depending on the context.) In the network shown in Fig. 1, bridges 61, 62, and 63 can be considered to have a star or hub configuration, as can repeater 67.

The term *node* is often used in describing networks to indicate any transmitter or receiver in the network. Repeater 67, for example, is a network intermediate system connected to four nodes, three of those being end systems and one being a different intermediate system bridge 60.

### Drivers, Adaptors, and LAN Topology

Each of the ISs and ESs in Fig. 1 includes one or more *adaptors* and hardware or software instructions sometimes referred to as *drivers.* An adaptor generally includes circuitry and connectors for communication over a segment and translates data from the digital form used by the computer circuitry in the IS or ES into a form that may be transmitted over the segment, e.g., electrical signals, optical signals, radio waves, etc. An ES such as 50b will generally have one adaptor for connecting to its single segment. A LAN IS such as 61 will have five adaptors, one for each segment to which it is connected. A driver is a set of instructions resident on a device that allows the device to accomplish various tasks as defined by different network protocols. Drivers are generally software programs stored on the ISs or ESs in a manner that allows the drivers to be modified without modifying the IS or ES hardware.

LANs may vary in the *topology* of the interconnections among devices. In the context of a communication network, the term "topology" refers to the way in which the stations attached to the network are interconnected. Common topologies for LANs are bus, tree, ring, and star. LANs may also have a hybrid topology made up of a mixture of these. The overall LAN pictured in Fig. 1 has essentially a tree topology, but incorporating one segment, 72d, having a bus topology, and incorporating one segment 70d having a star topology. A ring topology is not shown in Fig. 1, but it will be understood that the present invention may be used in conjunction with LANs having a ring topology.

### Network Intermediate Systems: Routers, Bridges, Repeaters

The LAN ISs in LAN 40 include *bridges* 60-63. Bridges are understood in the art to be a type of computer optimized for very fast data communication between two or more segments. A bridge according to the prior art generally makes no changes to the packets it receives on one segment before transmitting them on another segment. Bridges are not necessary for operation of a LAN and, in fact, in prior art systems bridges are generally invisible to the ESs to which they are connected and sometimes to other bridges and routers.

LANs also may contain a number of repeaters, which is one configuration possible for device 67. A repeater generally repeats out of each of its ports all data received on any one port, such that the network behavior perceived by ESs such as 50d-f is generally identical to the behavior they would perceive if they were wired on the same segment such as 52d-g. In alternative network topologies, device 67 could be a bridge/switch as described in related patent applications.

### Layers

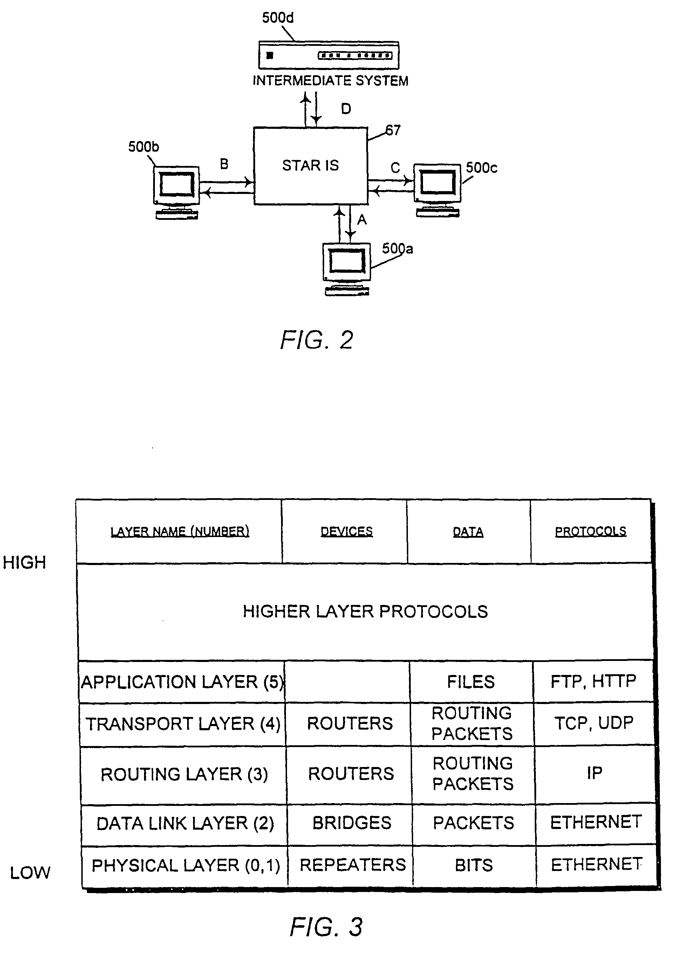

An additional background concept important to understanding network communications is the concept of *layered* network protocols. Modem communication standards, such as the TCP/IP Suite and the IEEE 802 standards, organize the tasks necessary for data communication into *layers.* At different layers, data is viewed and organized differently, different protocols are followed, and different physical devices handle the data traffic as abstracted at that layer. Fig. 3 illustrates one example of a layered network standard having a number of layers, which we will refer to herein as *the Physical Layer, the Data Link Layer, the Routing Layer, the Transport Layer and the Application Layer.* These layers correspond roughly to the layers as defined within the TCP/IP Suite. (The 802 standard has a different organizational structure for the layers and uses somewhat different names and numbering conventions.)

An important ideal in layered standards is the ideal of *layer independence.* A layered protocol suite specifies standard interfaces between layers such that, in theory, a device and protocol operating at one layer can coexist with any number of different protocols operating at higher or lower layers, so long as the standard interfaces between layers are followed.

### Network modularity creates increasing security concerns

In many office environments, networks such as that shown in Fig. 1 are designed to be highly modular. When a office building is constructed, typically network jack connections are provided throughout the office space, allowing computers to be flexibly installed in various offices or moved around as needed. In such a case, any of the ESs shown in Fig. 1 may represent unconnected jacks awaiting connection to an actual ES computer.

While this modularity is highly desirable in many office environments, it also creates security concerns in that a person with access to a workspace containing a network jack can connect a device to the jack and that device can hear some or all of the traffic on the network. Furthermore, that device can potentially even send traffic out over the network to be routed via a gateway over the internet. In a worse-case scenario, a small box could be plugged into a network jack and forward all LAN traffic over the network's WAN connection to a remote location without a network owner being aware of the breach in security.

Another potential security problem in a network can occur when an authorized network end system, that is properly installed, is not attended for a period of time and can be accessed by an unauthorized person. In such a case, even where a user is unable to login to the network server, an unauthorized person could run software on the end system that would be capable of sending out packets on the network or of sniffing packets on the network, thereby gaining unauthorized access to network data or resources.

In prior art network systems, unauthorized access to a network server is prevented by requiring users to login to the server and by timing out an idle login either at the server or setting up a password-protected screensaver. However, neither of these mechanisms prevents an unauthorized person from rebooting an ES with a network connection or powering up a turned-off ES and thus gaining access to the network. Some prior art systems also include user verification at the point of a telephone dial-in SLIP or PPP connection to a network, but these systems are limited to a dial-in environment.

What is needed is a method and apparatus for improving security in a LAN and for preventing unauthorized equipment or an unauthorized person from connecting to a network and listening-in on network traffic. What is also needed is a method and apparatus for verifying the identity of a user prior to allowing the user to send or receive data on a network.

The parent U.S. application discusses mechanisms of providing increased network security using link-beat detection at a star intermediate system and a variety of authentication schemes that are called whenever an unauthenticated user connects or reconnects to the star device. One aspect of that invention involves a star system requiring a user to supply some type of password to the star system for authentication. However, in some applications it will be desirable to provide a system wherein a user's password is not transmitted over the network so that the password cannot be captured by a sniffing device. What is further needed, therefore, is a user authentication system that does not require that a user password be transmitted on the network but prevents unauthorized equipment or an unauthorized person from connecting to a network and listening-in on network traffic and verifies the identity of a user prior to allowing the user to send or receive data on a network.

### Prior Art

U.S. Patent No. 5,546,463, titled "Pocket Encrypting and Authenticating Communications Device," and issued August 13, 1996 to Caputo et al., describes a portable device intended for operation in a circuit switched environment where the physical location of the connection or port for the user is known and uniquely identifiable with the user element. Caputo discloses that the portable device can operate as an electronic "token" to uniquely identify the user to a network, to a computer system or to an application program.

U.S. Patent No. 4,896,319, titled "Identification and Authentication of End User Systems for Packet Communications Network Services," and issued January 23, 1990 to Lidinsky, et al., describes a high capacity metropolitan area network (MAN). The described MAN provides security features including a port identification supplied by data concentrators, and a check that each packet is from an authorized source user, transmitting on a port associated with that user, to an authorized destination user that is in the same group (virtual network) as the source user.

U.S. Patent No. 5,805,801, titled "System and Method for Detecting and Preventing Security," and issued September 8, 1998 to Holloway , et al. describes a system and method for providing security against intrusion in a campus LAN network. Holloway discloses a managed hub that discovers each interconnect device in the network that supports the security feature and maintains an interconnect device list of such devices, which may include token ring switches, Ethernet switches, bridges and routers. The managed hub detects an intrusion by an unauthorized address on one of its ports and notifies the interconnect devices of the intrusion by transmitting a security breach detected frame.

### SUMMARY OF THE INVENTION

In general terms, the present invention comprises techniques and devices for a computer network with improved security. According to the invention, network intermediate systems (IS) that are connected in a star or similar topology, such as repeaters or switches, that provide point-to-point connections to one or more ESs are enabled to authenticate a user at the first connection point the user makes with the network. The intermediate systems provide an authentication routine every time an ES makes a new connection on a port. According to the invention, an IS will limit the forwarding of packets down its port to an ES and will limit forwarding data from an ES until an authentication process is complete.

A new connection to a point-to-point port on an IS may be detected by the presence or resumption of a link-beat (sometimes referred to as heart-beat) signal that is maintained at the physical layer on the point-to-point connection whenever there is an active node/ES on a port. Authentication is accomplished at a user level through a challenge/response exchange as described below.

Authentication according to the invention is controlled by a first network intermediate system (star device) to which an end system connects. Some parts of the authentication may be performed locally and, in an alternative embodiment, the star device may communicate with one or more other devices on the network to complete authentication of a new user.

According to a further embodiment of the invention, at power up or when a star device detects a new connection on a port, the star device initiates an authentication routine to reliably verify a user. To do this, a star device, according to one embodiment, may use a directory server existing somewhere on the network to retrieve a certificate or a certification path for the user based on an identification supplied by a user. The certificate or certification path is decoded into a public key for a particular user. The invention uses a modified public key cryptography and a challenge response scheme to authenticate a user.

In one embodiment, once a public key for a particular user has been decoded, a challenge is generated and is encrypted with the user's public key. The encrypted challenge is then sent to the end system. The user must then supply his private key to decrypt the challenge at the end system and the end system returns the decrypted challenge to the star device. The invention compares the response with the challenge it originally generated and based on the results of the match, authenticates the port.

In an alternative embodiment, a challenge is generated and presented to the user, and the user then encrypts the challenge using his private key and returns the encrypted challenge as a response. A public key for a particular user it then used to decrypt the challenge, either at the star device or the security server. The invention compares the decrypted response with the challenge it originally generated and based on the results of the match, authenticates the port.

In a further embodiment, if the star device is restricted in terms of the computation power it can devote to authentication, a security server performs the computation-intensive cryptography functions. The star device in this case receives the user name from the end system and requests the security server to compute the challenge for the user. The security server gets the user certification path, generates a challenge, encrypts it using the user's public key and sends both the challenge and encrypted challenge to the star device. The star device then sends only the encrypted challenge to the end system for decryption. When the end system responds with the decrypted challenge, the star device compares the returned challenge with the unencrypted original challenge supplied by the security server and allows or disallows network access to the user based on the comparison results. In this embodiment, it is important that the connection between the star device and security server be secure such that an intruder cannot capture the challenge and encrypted challenge. This may be done by having the security server directly coupled or integrated with the star device. Alternatively, messages using message integrity and confidentiality mechanisms, as are known in the art, can be used to ensure that the message from the security server to the star device is generated by the security server.

According to a further embodiment the invention may be incorporated in a network intermediate system with a star configuration which may perform authentication locally or in a preferred embodiment may communicate with a login server on the network to authenticate verification data which may consist of a user name and password of a user or of a challenge response data or other verification data supplied by the user.

Specific aspects of the invention will be better understood upon reference to the following detailed description and in conjunction with the drawings.

### BRIEF DESCRIPTION OF THE DRAWINGS

FIG. 1 is a diagram of a moderate sized network of one type in which the invention may be effectively employed;
FIG. 2 is a diagram illustrating an IS connecting four transmitter/receivers in a star/hub connection to illustrate aspects of the invention;
FIG. 3 is a diagram illustrating a layered network protocol;
FIG. 4 is a block diagram of an IS star device according to one specific embodiment of the invention;
FIG. 5 is a flow chart illustrating user authentication according to one embodiment of the invention;
FIG. 6 is a diagram of a computer system with a fixed medium 717 which may be used to implement one embodiment of the invention.

### DETAILED DESCRIPTION OF SPECIFIC EMBODIMENTS

Fig. 2 is a generalized and simplified block diagram of a star device IS connected to three ESs and one other IS that will be used to illustrate the invention. The star IS 67 may represent either a repeater at layer 1 or a bridge at layer 2 or other network intermediate systems according to different network configurations.

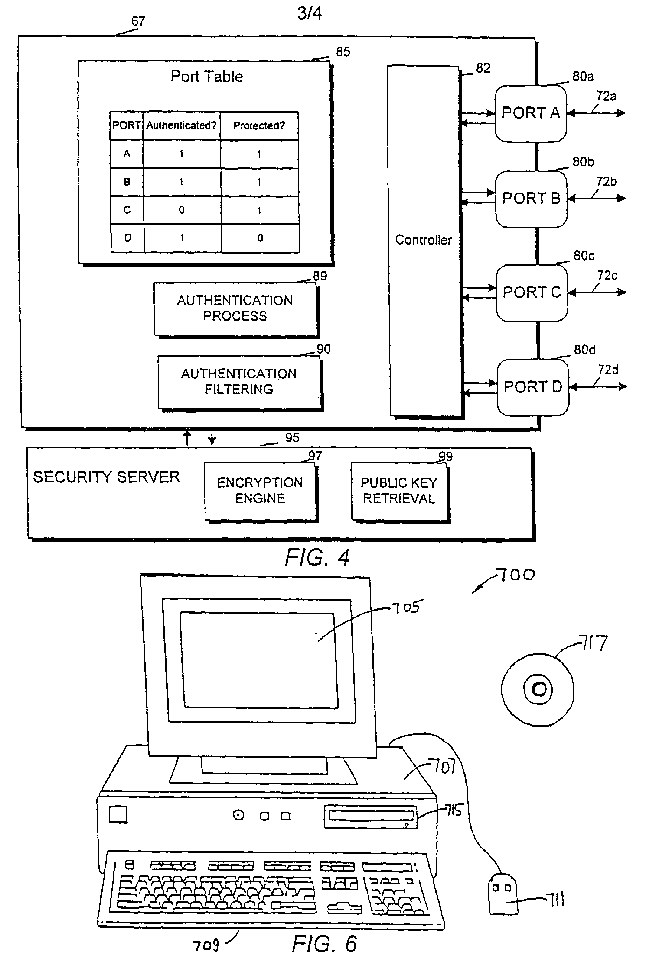

Fig. 4 is a block diagram representing an IS internal structure according to one embodiment of the invention. As discussed above, in one embodiment, a star device maintains state regarding which of its connected ports are authenticated and which are not and detects when the node connected to a port is disconnected. An authentication process is called whenever a physical connection is detected on an unauthenticated port or whenever any attempt is made to transmit data on an unauthenticated port. In one embodiment, network transmission is limited on a port until a port connection has been authenticated.

Fig. 4 also shows security server 95. According to one embodiment of the invention, security server 95 is supplied with a user identification from IS 67 and then presents to IS 67 an encrypted challenge and an unencrypted challenge for performing authentication as described below. Security server 95 may be a process running on the same hardware as IS 67 or may be a separate device on the network such as server 50f shown in Fig. 1.

Security server 95 performs a type of two-key encryption in engine 97 using a user's "public" key, as is known in the art, after first retrieving a user's public key using retrieval engine 99. Public key encryption uses a particular receiver's public key to encrypt a message. That encrypted message can then be decrypted only by a matching private key, which is generally known only to the owner of the private key. In one embodiment of the invention, the authenticity of a retrieved public key is guaranteed by using a hierarchical certification path and certification authority as is known in the art. The certificate path may be stored along with other user configuration data in a directory server 52g, which may then act as one of the certification authorities on the network.

### Physical Layer Linkbeat Detection

In contrast to prior art network and LAN systems, an embodiment of the present invention authenticates a user at a first LAN intermediate system to which the user is connected on a per port basis, then authenticates a user each time there is any interruption in the physical link with an end system connected to a particular network port. In order to accomplish this, the invention uses a mechanism at the physical layer to determine whether an end system is newly connected to a port, rebooted, or power cycled at a port.

In one specific embodiment, point-to-point ethernet linkbeat, as is known in the art, is used to determine whether there has been any interruption in the physical connection to an end system. As is known in the art, point-to-point ethernet defines a linkbeat packet whereby, during periods of silence, adapters at both ends of a point-to-point ethernet connection send periodic very small packets, called *linkbeat packets*, to inform the adapter at the other end that an adapter is connected to a port. In prior art systems, the presence or absence of this linkbeat packet is used only at the lowest physical layer to manage transmissions and is not made known to higher layer protocols.

According to the current invention, however, a controller, such as 82, is enabled to respond to an interruption in the linkbeat on a port by resetting an authentication bit in a port table 85.

A resumption of linkbeat on a port or an attempt to send data on a port that is unauthenticated will be detected by controller 82 and will cause the controller to initiate an authentication process 89 as described below.

Other mechanisms for detecting the interruption in a physical connection are possible for use in conjunction with the invention, and according to the invention, any mechanism appropriate for a particular physical interface that can sense a disconnection from the physical interface or a reboot of an end system connected to the physical interface may be used with the authentication scheme of the invention.

### Authenticating a Port

According to the invention, an authentication process is called generally whenever data transmission is attempted or linkbeat is resumed on an unauthenticated port. According to an embodiment, when authentication process 89 is invoked by controller 82, the authentication process will cause a message to be sent to an unauthenticated end system, such as 50a requesting authentication data. Such data may be in the form of a user name and password, as is known in the art, or in the form of a challenge/response protocol, where the intermediate system selects a challenge value and a user must provide a corresponding value according to a secret code. In response, the end system 50a transmits authentication data back to the intermediate system 67 for authentication.

Intermediate system 67 then uses that authentication data to authenticate the user on an unauthenticated port. This may be done locally, in which case the intermediate system 67 will keep an authentication table local to it or it may be done using a remote login server as is known in the art. In the latter case, authentication process 89 will compose an appropriate protocol message to the login server, and that message will be transmitted over the local area network. As is known in the art, the login server may be any processor running on the network that can receive authentication messages. The login server then transmits back a message indicating whether the authentication data is valid when compared against data stored at the login server. This message is received by authentication process 89. In response thereto, authentication process 89 can set the authentication bit in port table 85, indicating that the port is authenticated.

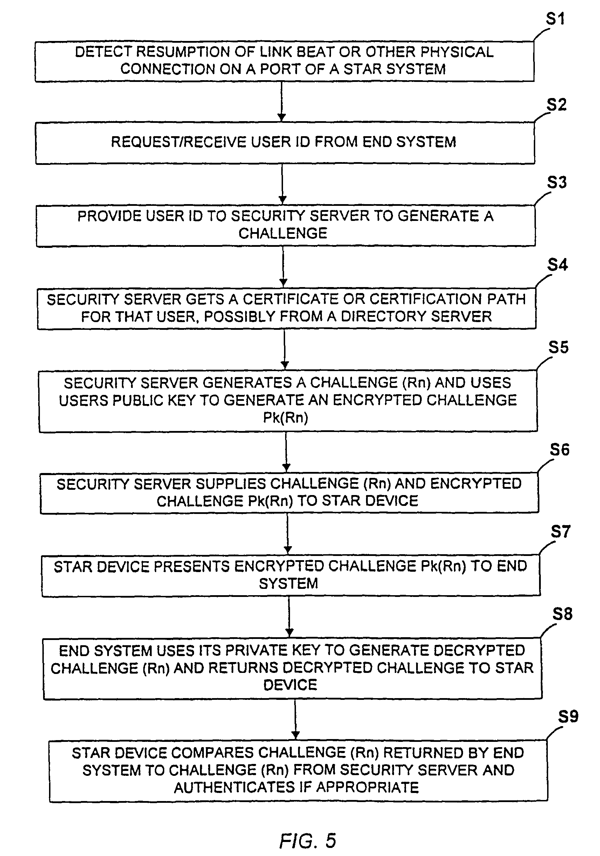

In one specific embodiment, the authentication process takes place according to the flow chart shown in Fig. 5. According to this embodiment, when authentication process 89 is invoked by controller 82, the authentication process will cause a message to be sent to an unauthenticated end system, such as 50a requesting an identification that will be used for authentication (referred to herein as a user id). The user id is then provided to a security server 95, which is a process accessible to device 67, either running on that device or elsewhere on the network.

In one embodiment, it is the task of security server 95 to generate both a challenge to be presented to an end system and an expected response from the end system. In an alternative embodiment, the star device will generate the challenge and the security server will generate an expected response. Separating out the task of generating a challenge/expected response to a stand-alone security server has the advantage of moving this computationally demanding task off of the star device.

In order for the security server to encrypt the challenge, it must have a public key for the user. In one embodiment, the security server looks up a public key for a user using a directory server or other data repository, which is generally a remote server on the network that stores a variety of data about a user. The security server may also store the public key locally and may also cache public keys for known users for a period of time so that repeated logins by a user at an end system connected to the same security server do not require full fetching and decoding of a certification path from a directory server. In one embodiment, the authentication process will require a user to have its private key available to decrypt a new challenge each time the authentication process is run rather than allowing the process to be run using a stored password at an end system.

In this way, access to the network can be prevented by an authorized person using an authorized and properly connected end system.

FIG. 5 depicts a flow chart of an authentication method according to the invention. The method begins when an intermediate system detects a new user or connection of a port (S1). The IS requests a user identification from the ES (S2) and provides that identification to a security server (S3). The security server retrieves a certification path from a certification authority (S4) and derives from that a public key (Pk), which it then uses to encrypt a challenge to produce an expected response (Pk(Rn)) (S5). The security server supplies a challenge and an encrypted challenge to a star device (S6), which presents the encrypted challenge to the ES (S7). The ES must then use its private key to decrypt the encrypted challenge and return a response to the star device (S8), which then compares the response to the unencrypted challenge to determine if it should authenticate the port (S9).

In an alternative embodiment of the invention, an unencrypted challenge is presented to the end-system, which must then use its private key to encrypt the challenge, which is returned to the star device. Then either the star device, or a security server, uses a public key for the user to decrypt the response and compares that to the original challenge.

### Controlling Access to the Network

An intermediate system, such as 67, with a direct connection to a number of end systems prevents unauthorized access to a network by controlling the flow of network data to end systems that have not been authenticated. An intermediate system, such as 67, may simply allow no data to flow to and from an end system that is unauthenticated, except for the minimum data needed to interact with the authentication process 89, requiring that an end system be configured such that the authentication may be accomplished prior to any other access to a network being necessary.

An unauthenticated end system may also be allowed limited access to the network in order to accomplish initial network login and configuration prior to completing the authentication process. One mechanism for doing so is to include a protected field in a port table, such as 85, allowing an unauthenticated port to transmit data out of an unprotected port only and remaining restricted until an authentication process is complete.

Intermediate system 67 may also include a further filtering process for unauthenticated ports, allowing packets to flow only to particular addresses or restricting the protocol of packets flowing to or from any unauthenticated port. In such case, a filtering process, such as 90, may be invoked only on unauthenticated ports to examine either addresses or protocols of packets to and from such ports and to prevent the flow of packets that do not meet the filter process definitions. A filtering process may also be invoked on packets in accordance with a Virtual LAN architecture, such as described in co-assigned U.S. Patents, U.S. Patent No. 5,732,003 , entitled VIRTUAL NETWORK ARCHITECTURE issued May 12,1998, and U.S. Patent No. 6,041,166, entitled VIRTUAL NETWORK ARCHITECTURE FOR CONNECTIONLESS LAN BACKBONE issued March 21, 2000.

In a further embodiment, the invention is designed to work in a managed intermediate system, as is known in the art, managed by a standard network protocol such as SNMP or other network protocol. In such a system, a network manager may set various authenticating characteristics.

In a further embodiment, the invention may network with an intermediate system incorporating an end-system detecting algorithm, allowing the intermediate system to detect whether a single end system is connected to a port, such as port A, or another intermediate system, such as a repeater, is connected to a port.

In a further embodiment, the invention is designed to require modifying an intermediate system only. In such a case, an intermediate system according to the invention works with preexisting adapter driver software and operating system software on end systems to call the authentication routines on an end system as defined by the preexisting operating system at the appropriate time. In other embodiments, the invention will work with a specially designed adapter driver software on an end system, to perform the authentication routine.

The invention may be embodied in a set of executable computer program code which may be stored into a fixed computer medium such as a disk, diskette, volatile memory or nonvolatile memory, or any other medium for storing computer code. In such a case, when such instructions are loaded and executed in an appropriately configured network intermediate system, the intermediate system will perform as described herein. A representation of such a system 700 is shown in Fig. 6 containing CPU 707, optional input devices 709 and 711, disk drives 715 and optional monitor 705. Fixed media 717 may be used to program such a system and could represent a disk-type optical or magnetic media or a memory.

The invention also may be embodied within the circuitry of an application specific integrated circuit (ASIC). In such a case, the invention may be embodied in a computer understandable descriptor language which may be used by an ASIC foundry to create an ASIC device that operates as herein described. In this embodiment, computer system 700 may be understood as a computer system for reading instructions from media 717 for the manufacturing of an ASIC.

The invention has now been explained with reference to specific embodiments. Other embodiments will be obvious to those with skill in the art. In particular the invention has application in many different networking environments and schemes. It is therefore intended that the invention not be limited except as indicated in the attached claims.

## Claims

1. A method for an intermediate system (67) in a network limiting transmission or reception of data with an unauthorized user comprising:
in a network intermediate system (67) having a plurality of ports (80a-d) for connection to network segments (72a-d), storing an indication for each port (80a-d) indicating whether said port (80a-d) is authenticated or unauthenticated; and
prior to freely transmitting or receiving network data on any said port (80a-d), performing an authentication process (89) to authenticate said port (80a-d) when a physical connection is detected on an unauthenticated port or when an attempt is made to transmit data on an unauthenticated port.

2. The method according to claim 1, wherein said network is a packet switched communication network and said method is for improving network security.

3. The method according to claims 1 or 2, wherein said authentication process (89) authenticates each user at the port (80a-d) to which said user is connected.

4. The method according to any one of claims 1,2 or 3 wherein once said user is authenticated, allowing data packets to be transmitted or received by said user without including user identification or port identification information in said data packets and without requiring said network intermediate system (67) to create and maintain an association between said user and a corresponding port (80a-d) of said network.

5. The method according to any one of claims 1, 2, 3 or 4 wherein said method further comprises:
detecting when an end system (500a-d) is not present or is rebooted on a port (80a-d) and setting that port (80a-d) to an unauthenticated state,

6. The method according to any one of claims 1, 2, 3 or 4, wherein said method provides that user identification or port identification information is not included in data packets which are ultimately transmitted in said network.

7. A method for improving network security comprising:
at a network intermediate system (67) to which a network end system (500a-d) connects storing state indicating whether a network port (80a-d) connecting said network intermediate system (67) to an end system (500a-d) is authenticated;
initially setting said state to an unauthenticated state at intermediate system (67) power up or as programmed by a network manager;
prior to an unrestricted transmission or reception of network data through said network intermediate system (67) to an unauthenticated port (80a-d), performing an authentication process (89) on said port (80a-d);
resetting an authentication state to an unauthenticated state whenever an interruption in the physical connection between a port (80a-d) and an end system (500a-d) is detected; and
setting said state to an authenticated state only when said authentication process (89) returns a message that authentication has been validated.

8. The method according to claim 7, wherein said method is for improving network security in a packet switched communication network and wherein said authentication process (89) comprises using a public key/private key encryption algorithm to determine that an end system (500a-d) connected to an unauthenticated port (80a-d) is in possession of a valid private key, said authentication process (89) also computing a response at said end system (500a-d) from a challenge, said response requiring a human user to supply at said end system (500a-d) a private key that is stored on a physical device that must be present as said end system (500a-d).

9. The method according to claims 7 or 8, wherein said authentication process (89) allows data packets to be transmitted or received by a user without including user identification or port identification information in said data packets and without requiring said network intermediate system (67) to create and maintain an association between said user and a corresponding port (80a-d) of said packet switched communication network.

10. The method according to claim 1, 2, 3, 4, 5, 6, 7, 8 or 9, wherein the authentication process (89) comprises:
requesting an identification;
using said identification to determine a public encryption key for a user;
generating a challenge by said network for said user;
presenting said challenge to said user;
receiving from said user a response to said challenge, said response generated at said user by operating on said challenge using a private key;
verifying said response by performing an operation on said response and said challenge; and
authenticating said user only if said verifying indicates that said private key corresponds to said public key.

11. The method according to claim 10, wherein:
requesting an identification comprises requesting via said network intermediate system (67) an identification from said user connected at a specific port and receiving at said network intermediate system (67) said identification from said user;
using said identification to determine a public encryption key for said user comprises using from said network intermediate system said identification;
presenting said challenge comprises presenting said challenge from said network intermediate system (67);
receiving from said user a response to said challenge comprises receiving from said user at said network intermediate system (67) a response and said private key is supplied by said user;
verifying said response by performing an operation comprises verifying via said network intermediate system (67) said response by performing a processing operation on said response and said challenge using said public key associated with said user; and
authenticating said user comprises authenticating said user via said network intermediate system (67),
and said authentication process (89) further comprises:
computing a response at a physically identified end system (500a-d) from said challenge, said response requiring a user to supply a private key at said end system (500a-d), wherein said step of computing requires a human user to supply at said end system (500a-d) a private key that is stored on a physical device that must be present at said end system (500a-d).

12. The method according to claims 10 or 11 wherein said step of requesting comprises requesting an identification to be supplied by a user wherein said identification is capable of being shared with or passed from other login routines.

13. The method according to claims 10 or 11 wherein said step of requesting comprises prompting a user for a user name.

14. The method according to claims 10 or 11 wherein said step of using said identification comprises passing said identification to a security server (95) to determine a public key for said user.

15. The method according to claims 10 or 11 wherein said step of using said identification comprises using said identification to look up a certificate and decoding that certificate to determine a public key for said user.

16. The method according to claim 15, wherein said certificate is looked up in a table stored in a first network resource and said certificate is decoded via a second network resource.

17. The method according to claims 10 or 11 wherein said step of using said identification comprises transmitting an identification to a directory server (52g), said directory server (52g) retrieving a certification path that corresponds to said identification and returning said certification path.

18. The method according to claim 17, wherein said identification is transmitted from said network intermediate system (67) and said certificate path is returned to said network intermediate system (67).

19. The method according to claim 10, wherein said authentication process (89) further comprises:
computing a response at an end system (500a-d) from said challenge, said response requiring a user to supply a private key at an end system (500a-d) wherein said step of computing comprises using a private key for said user and public-key/private-key encryption algorithm to generate said response.

20. The method according to claims 10 or 11 wherein said step of generating a challenge comprises generating a random number.

21. The method according to claims 10 or 11 wherein said step of generating a challenge comprises using, said public key and public-key/private-key encryption algorithm to generate said challenge by encrypting a message, said challenge comprising said encrypted message.

22. The method according to claims 10 or 11 wherein said step of generating a challenge is performed by a security server (95).

23. The method according to claims 10 or 11 wherein said step of verifying comprises decrypting said response using said public key and comparing the result to said challenge.

24. The method according to claim 23 wherein said decrypting of said response is performed by a security server (95).

25. The method according to claims 10 or 11, wherein said step of using said identification comprises transmitting an identification from said network intermediate system (67) to a directory server (52g), said directory server (52g) retrieving a certificate that corresponds to said identification and returning said certificate to said network intermediate system (67).

26. The method according to claims 10 or 11, wherein said step of computing comprises using a private key for said user and public-key/private-key encryption algorithm to generate said response.

27. The method according to claims 10 or 11, wherein the authentication process (89) further comprises filtering network data to and from said arbitrary port (80a-d) based on the authentication status of the user at that port (80a-d).

28. The method according to claims 10 or 11, wherein the step of verifying comprises comparing said response to an expected response at said network intermediate system (67) using a fast compare engine.

29. The method according to claims 10 or 11, wherein said step of verifying comprises decrypting said response using said public key and comparing the result to said challenge.

30. A secure hub (67) comprising:
a port state variable containing state for a port (80a-d) indicating whether an end system (500a-d) connected to said port (80a-d) has been authenticated;
means for carrying out an authentication process (89) capable of receiving a user identification from a port (80a-d) and of communicating with network devices in order to receive a public key for said user and challenge data to present to a port (80a-d);
a verification engine for determining if a response is valid by operating on said response and said challenge using said public key and a public key/private key encryption algorithm;
a comparator for comparing a response from an end system to a challenge, and
a controller (82) capable of setting an authentication bit for a port (80a-d) in response to a result from said comparator.

31. The secure hub (67) according to claim 30, wherein said secure hub (67) is in a packet switched communication network and the validity of said response compared by said comparator depends on a secret key being known at said end system (500a-d).

32. The secure hub (67) according to claims 30 or 31 further comprising a second state indicating whether at least one port (80a-d) is an unprotected port out of which data from unauthenticated ports (80a-d) may be transmitted.

33. The secure hub according to any one of claims 30, 31 or 32 wherein said verification engine computes a response at a physically identified end system (500a-d) from said challenge, said response requiring a user to supply a private key at said end system (500a-d), wherein said computing of said response requiring a human user to supply at said end system (500a-d) a private key that is stored on a physical device that must be present at said end system (500a-d).

34. The secure hub (67) according to claim 30, 31, 32, or 33, wherein said means for carrying out an authentication process (89) allows data packets to be transmitted or received by a user without including user identification or port identification information in said data packets and without requiring said network intermediate system (67) to create and maintain an association between said user and a corresponding port (80a-d) of said packet switched communication network.

35. The secure hub (67) according to claim 30, 31, 32, 33 or 34, wherein said means for carrying out an authentication process (89) is adapted to
request an identification;
use said identification to determine a public encryption key for a user; generate a challenge by said network for said user;
present said challenge to said user;
receive from said user a response to said challenge, said response generated at said user by operating on said challenge using a private key;
verify said response by performing an operation on said response and said challenge; and
authenticate said user only if said verifying indicates that said private key corresponds to said public key.

36. The secure hub according to claim 35, wherein:
requesting an identification comprises requesting via said network intermediate system (67) an identification from said user connected at a specific port and receiving at said network intermediate system (67) said identification from said user;
using said identification to determine a public encryption key for said user comprises using from said network intermediate system said identification;
presenting said challenge comprises presenting said challenge from said network intermediate system (67);
receiving from said user a response to said challenge comprises receiving from said user at said network intermediate system (67) a response and said private key is supplied by said user;
verifying said response by performing an operation comprises verifying via said network intermediate system (67) said response by performing a processing operation on said response and said challenge using said public key associated with said user; and
authenticating said user comprises authenticating said user via said network intermediate systems (67),
and said means for carrying out an authentication process (89) further adapted to:
compute a response at a physically identified end system (500a-d) from said challenge, said response requiring a user to supply a private key at said end system (500a-d), wherein said computing requires a human user to supply at said end system (500a-d) a private key that is stored on a physical device that must be present at said end system (500a-d).

37. The secure hub according to claims 35 or 36 wherein said requesting comprises requesting an identification to be supplied by a user wherein said identification is capable of being shared with or passed from other login routines.

38. The secure hub according to claims 35 or 36 wherein said requesting comprises prompting a user for a user name.

39. The secure hub according to claims 35 or 36 wherein said using said identification comprises passing said identification to a security server (95) to determine a public key for said user.

40. The secure hub according to claims 35 or 36 wherein said using said identification comprises using said identification to look up a certificate and decoding that certificate to determine a public key for said user.

41. The secure hub according to claim 40, wherein said certificate is looked up in a table stored in a first network resource and said certificate is decoded via a second network resource.

42. The secure hub according to claims 35 or 36 wherein said using said identification comprises transmitting an identification to a directory server (52g), said directory server (52g) retrieving a certification path that corresponds to said identification and returning said certification path.

43. The secure hub according to claim 42, wherein said identification is transmitted from said network intermediate system (67) and said certificate path is returned to said network intermediate system (67).

44. The secure hub according to claim 35, wherein said means for carrying out an authentication process (89) further adapted to
compute a response at an end system (500a-d) from said challenge, said response requiring a user to supply a private key at an end system (500a-d) wherein said computing comprises using a private key for said user and public-key/private-key encryption algorithm to generate said response.

45. The secure hub according to claims 35 or 36 wherein said generating a challenge comprises generating a random number.

46. The secure hub according to claims 35 or 36 wherein said generating a challenge comprises using said public key and public-key/private-key encryption algorithm to generate said challenge by encrypting a message, said challenge comprising said encrypted message.

47. The secure hub according to claims 35 or 36 wherein said generating a challenge is performed by a security server (95).

48. The secure hub according to claims 35 or 36 wherein said verifying comprises decrypting said response using said public key and comparing the result to said challenge.

49. The secure hub according to claim 48 wherein said decrypting of said response is performed by a security server (95).

50. The secure hub according to claims 35 or 36, wherein said using said identification comprises transmitting an identification from said network intermediate system (67) to a directory server (52g), said directory server (52g) retrieving a certificate that corresponds to said identification and returning said certificate to said network intermediate system (67).

51. The secure hub according to claim 36, wherein said computing comprises using a private key for said user and public-key/private-key encryption algorithm to generate said response.

52. The secure hub according to claims 35 or 36, wherein said means for carrying out an authentication process (89) further adapted to filter network data to and from said arbitrary port (80a-d) based on the authentication status of the user at that port (80a-d).

53. The secure hub according to claims 35 or 36, wherein the verifying comprises comparing said response to an expected response at said network intermediate system (67) using a fast compare engine.

54. The secure hub according to claims 35 or 36, wherein said verifying comprises decrypting said response using said public key and comparing the result to said challenge.

55. A network having enhanced security comprising:
an end system (500a-d) interacting with a user;
a state variable containing state indicating whether a connected end system (500a-d) has been authenticated;
a secure hub (67) providing a private connection between said end system (500a-d) and network data and capable of filtering data to said end system (500a-d) based on an authentication state for said end system (500a-d);
means for carrying out an authentication process (89) capable of receiving a user identification from an end system (500a-d) and capable of retrieving a mechanism for generating a challenge to present to an end system (500a-d);
a comparator for comparing a response from an end system to a challenge, the validity of said response depending on a secret key being known at said end system; and
a controller (82) capable of setting an authentication bit for an end system (500a-d) in response to a result from said comparator.

56. The network according to claim 55, wherein said network is a packet switched communication network.

57. The network according to claims 55 or 56, wherein the means for carrying out an authentication process (89) being adapted to compute a response at said end system (500a-d) from said challenge, said response requiring a user to supply a private key at said end system (500a-d), wherein said computing of said response requires a human user to supply at said end system (500a-d) a private key that is stored on a physical device that must be present at said end system (500a-d).

58. The network according to claim 55, 56 or 57, wherein said means for carrying out an authentication process (89) allows data packets to be transmitted or received by a user without including user identification or port identification information in said data packets and without requiring said network intermediate system (67) to create and maintain an association between said user and a corresponding port (80a-d) of said packet switched communication network.

59. The network according to claim 55, 56, 5 7 or 58, wherein the means for carrying out an authentication process (89) being adapted to:
request an identification;
use said identification to determine a public encryption key for a user;
generate a challenge by said network for said user;
present said challenge to said user;
receive from said user a response to said challenge, said response generated at said user by operating on said challenge using a private key;
verify said response by performing an operation on said response and said challenge; and
authenticate said user only if said verifying indicates that said private key corresponds to said public key.

60. The network according to claim 59, wherein:
requesting an identification comprises requesting via said network intermediate system (67) an identification from said user connected at a specific port and receiving at said network intermediate system (67) said identification from said user;
using said identification to determine a public encryption key for said user comprises using from said network intermediate system said identification;
presenting said challenge comprises presenting said challenge from said network intermediate system (67);
receiving from said user a response to said challenge comprises receiving from said user at said network intermediate system (67) a response and said private key is supplied by said user;
verifying said response by performing an operation comprises verifying via said network intermediate system (67) said response by performing a processing operation on said response and said challenge using said public key associated with said user; and
authenticating said user comprises authenticating said user via said network intermediate system (67),
and said authentication process (89) further comprises:
computing a response at a physically identified end system (500a-d) from said challenge, said response requiring a user to supply a private key at said end system (500a-d), wherein said computing requires a human user to supply at said end system (500a-d) a private key that is stored on a physical device that must be present at said end system (500a-d).

61. The network according to claims 59 or 60 wherein said requesting comprises requesting an identification to be supplied by a user wherein said identification is capable of being shared with or passed from other login routines.

62. The network according to claims 59 or 60 wherein said requesting comprises prompting a user for a user name.

63. The network according to claims 59 or 60 wherein said using said identification comprises passing said identification to a security server (95) to determine a public key for said user.

64. The network according to claims 59 or 60 wherein said using said identification comprises using said identification to look up a certificate and decoding that certificate to determine a public key for said user.

65. The network according to claim 64, wherein said certificate is looked up in a table stored in a first network resource and said certificate is decoded via a second network resource.

66. The network according to claims 59 or 60 wherein said using said identification comprises transmitting an identification to a directory server (52g), said directory server (52g) retrieving a certification path that corresponds to said identification and returning said certification path.

67. The network according to claim 66, wherein said identification is transmitted from said network intermediate system (67) and said certificate path is returned to said network intermediate system (67).

68. The network according to claim 59, wherein said means for carrying out an authentication process (89) further adapted to:
compute a response at an end system (500a-d) from said challenge, said response requiring a user to supply a private key at an end system (500a-d) wherein said computing comprises using a private key for said user and public-key/private-key encryption algorithm to generate said response.

69. The network according to claims 59 or 60 wherein said generating a challenge comprises generating a random number.

70. The network according to claims 59 or 60 wherein said generating a challenge comprises using said public key and public-key/private-key encryption algorithm to generate said challenge by encrypting a message, said challenge comprising said encrypted message.

71. The network according to claims 59 or 60 wherein said generating a challenge is performed by a security server (95).

72. The network according to claims 59 or 60 wherein said verifying comprises decrypting said response using said public key and comparing the result to said challenge.

73. The network according to claim 72 wherein said decrypting of said response is performed by a security server (95).

74. The network according to claims 59 or 60, wherein said step of using said identification comprises transmitting an identification from said network intermediate system (67) to a directory server (52g), said directory server (52g) retrieving a certificate that corresponds to said identification and returning said certificate to said network intermediate system (67).

75. The network according to claims 59 or 60, wherein said step of computing comprises using a private key for said user and public-key/private-key encryption algorithm to generate said response.

76. The network according to claims 59 or 60, wherein the authentication process (89) further comprises filtering network data to and from said arbitrary port (80a-d) based on the authentication status of the user at that port (80a-d).

77. The network according to claims 59 or 60, wherein the step of verifying comprises comparing said response to an expected response at said network intermediate system (67) using a fast compare engine.

78. The network according to claims 59 or 60, wherein said step of verifying comprises decrypting said response using said public key and comparing the result to said challenge.

79. The network according to claim 55, 56 or 57, wherein said network is a local network.

80. The method according to claim 1, 2, 3, 4, 5 or 6, wherein said step of authenticating a port (80a-d) comprises receiving user verification data from said port (80a-d) and verifying said verification data and wherein said step of detecting comprises detecting the resumption of link-beat on a port (80a-d).

81. The method according to claim 80 wherein said step of verifying comprises transmitting verification data to a login server (64) on said network and receiving a confirmation from said login server (64).

82. The method according to claim 80 wherein said step of verifying comprises presenting a challenge on said port (80a-d) requesting that said port (80a-d) provide a secret value that would only be known to an authorized user.

83. The method according to claim 80 wherein after verification on said port (80a-d) verification data is used by an operating system on said end system (500a-d) to verify a user to other network resources.

84. The method according to claim 1, 2, 3 or 4 wherein said intermediate system (67) allows a limited amount of data to be transmitted and received on a port (80a-d) prior to authentication of that port (80a-d).

85. The method according to claim 1, 2, 3 or 4 further comprising limiting data transmission with an unauthenticated port (80a-d) to a subset of other ports (80a-d) that are designated unprotected ports (80a-d).

86. A computer-readable medium (717) containing computer program code that when loaded into an appropriately configured network intermediate system (67) and run will cause the network intermediate system (67) to perform the method according to any one of claims 1 through 29, and claims 80 to 85.

## Patentansprüche

1. Verfahren für ein Zwischensystem (67) in einer Netzbegrenzungsübertragung oder Datenempfang mit einem unberechtigten Nutzer, umfassend
in einem Netzzwischensystem (67) mit einer Anzahl Schnittstellen (80a-d) zum Anschluss an Netzsegmente (72a-d), Speichern einer Angabe für jede Schnittstelle (80a-d), die angibt, ob die Schnittstelle (80a-d) bestätigt oder unbestätigt ist; und
vor dem freien Übertragen oder Empfangen von Netzdaten an irgendeiner der Schnittstellen (80a-d), Ausführen eines Bestätigungsvorgangs (89) zur Bestätigung der Schnittstelle (80a-d), wenn ein physischer Anschluss an einer unbestätigten Schnittstelle erkannt wird oder wenn ein Versuch unternommen wird, Daten an einer unbestätigten Schnittstelle zu übertragen.

2. Verfahren gemäß Anspruch 1, wobei das Netz ein paketvermitteltes Kommunikationsnetz ist und das Verfahren dazu dient, die Netzsicherheit zu verbessern.

3. Verfahren gemäß Ansprüchen 1 oder 2, wobei der Bestätigungsvorgang (89) jeden Nutzer an der Schnittstelle (80a-d), an welcher er angeschlossen ist, bestätigt.

4. Verfahren gemäß irgendeinem der Ansprüche 1, 2 oder 3, wobei, sobald der Nutzer bestätigt ist, Datenpakete vom Nutzer übertragen und empfangen werden können, ohne dass in den Datenpaketen Nutzeridentifizierungs- oder Schnittstellenidentifizierungsinformation enthalten ist und ohne dass das Netzzwischensystem (67) einen Zusammenhang zwischen dem Nutzer und der Schnittstelle (80a-d) des Netzes unterhalten muss.

5. Verfahren gemäß irgendeinem der Ansprüche 1, 2, 3 oder 4, wobei das Verfahren zudem umfasst
Erfassen, wenn ein Endsystem (500a-d) an einer Schnittstelle (80a-d) nicht anwesend ist oder neu gestartet wird und Einstellen der Schnittstelle (80a-d) in einen unbestätigten Zustand.

6. Verfahren gemäß irgendeinem der Ansprüche 1, 2, 3 oder 4, wobei das Verfahren ermöglicht, dass Nutzeridentifizierungs- oder Schnittstellenidentifizierungsinformation nicht in Datenpaketen enthalten ist, die schließlich im Netz übertragen werden.

7. Verfahren zur Verbesserung der Netzsicherheit, umfassend an einem Netzzwischensystem (67), an welches ein Netzendsystem (500a-d) angeschlossen ist, Speichern eines Zustands, der angibt, ob eine das Netzzwischensystem (67) an ein Endsystem (500a-d) anschließende Netzschnittstelle (80a-d) bestätigt ist;
anfängliches Einstellen des Zustands in einen unbestätigten Zustand, bei Start des Zwischensystems (67), oder wie von einem Netzmanager programmiert;
vor einer unbegrenzten Übertragung oder Empfang von Netzdaten durch das Netzzwischensystem (67) an eine unbestätigte Schnittstelle (80a-d), Ausführen eines Bestätigungsvorgangs (89) an der Schnittstelle (80a-d);
Rücksetzen eines Bestätigungszustands in einen unbestätigten Zustand, immer wenn eine Unterbrechung des physischen Anschlusses zwischen einer Schnittstelle (80a-d) und einem Endsystem (500a-d) erkannt wird; und
Einstellen des Zustands in einen bestätigten Zustand, nur wenn der Bestätigungsvorgang (89) eine Nachricht zurücksendet, dass Bestätigung überprüft ist.

8. Verfahren gemäß Anspruch 7, wobei das Verfahren dazu dient, die Netzsicherheit in einem paketvermittelten Kommunikationsnetz zu verbessern, und wobei der Bestätigungsvorgang (89) umfasst Verwenden eines Public Key/Private Key-Verschlüsselungsalgorithmus zum Feststellen, dass ein mit einer unbestätigten Schnittstelle (80a-d) verbundenes Endsystem (500a-d) einen gültigen Private Key besitzt, und wobei der Bestätigungsvorgang (89) auch aus einer Anfrage am Endsystem (500a-d) eine Antwort errechnet, wobei die Antwort erfordert, dass ein menschlicher Nutzer am Endsystem (500a-d) einen Private Key liefert, der auf einem physischen Medium gespeichert ist, das am Endsystem (500a-d) vorhanden sein muss.

9. Verfahren gemäß Ansprüchen 7 oder 8, wobei der Bestätigungsvorgang (89) ermöglicht, dass Datenpakete von einem Nutzer übertragen oder empfangen werden können, ohne dass in den Datenpaketen Nutzeridentifizierungs- oder Schnittstellenidentifizierungsinformation enthalten ist und ohne dass das Netzzwischensystem (67) einen Zusammenhang zwischen dem Nutzer und der Schnittstelle (80a-d) des paketvermittelten Kommunikationsnetzes unterhalten muss.

10. Verfahren gemäß der Anspruch 1, 2, 3, 4, 5, 6, 7, 8 oder 9, wobei der Bestätigungsvorgang (89) umfasst
Anfordern einer Identifizierung;
Verwenden der Identifizierung, um einen Public Key zur Verschlüsselung für einen Nutzer zu erstellen;
Erstellen einer Anfrage durch das Netz für den Nutzer;
Anzeigen der Anfrage an den Nutzer;
Erhalten einer Antwort vom Nutzer auf die Anfrage, wobei die Antwort beim Nutzer erstellt wird durch Berechnen der Anfrage mit einem Private Key;
Überprüfen der Antwort durch Ausführen einer Operation an der Antwort und der Anfrage; und
Bestätigen des Nutzers, erst wenn die Überprüfung ergibt, dass der Private Key dem Public Key entspricht.

11. Verfahren gemäß Anspruch 10, wobei
das Anfordern der Identifizierung umfasst Anfordern einer Identifizierung über das Netzzwischensystem (67) vom Nutzer, der an einer bestimmten Schnittstelle angeschlossen ist und Erhalten der Identifizierung des Nutzers am Netzzwischensystem (67);
das Verwenden der Identifizierung, um einen Public Key zur Verschlüsselung für den Nutzer zu erstellen, umfasst Verwenden der Identifizierung vom Netzzwischensystem;
das Anzeigen der Anfrage umfasst Anzeigen der Anfrage vom Netzzwischensystem (67);
das Erhalten einer Antwort vom Nutzer auf die Anfrage umfasst Erhalten einer Antwort vom Nutzer am Netzzwischensystem (67), und der Private Key ist vom Nutzer geliefert;
das Überprüfen der Antwort durch Ausführen einer Operation umfasst Überprüfen über das Netzzwischensystem (67) der Antwort durch Ausführen einer Verfahrensoperation an der Antwort und der Anfrage mit dem Public Key, der mit dem Nutzer zusammenhängt; und
das Bestätigen des Nutzers umfasst Bestätigen des Nutzers über das Netzzwischensystem (67),
und der Bestätigungsvorgang (89) umfasst zudem
Berechnen einer Antwort auf einem physisch identifizierten Endsystem (500a-d) aus der Anfrage, wobei die Antwort erfordert, dass ein Nutzer einen Private Key am Endsystem (500a-d) bereitstellt, wobei der Berechnungsschritt erfordert, dass ein menschlicher Nutzer einen Private Key am Endsystem (500a-d) bereitstellt, der auf einem physischen Medium gespeichert ist, das am Endsystem (500a-d) vorhanden ist.

12. Verfahren gemäß Ansprüchen 10 oder 11, wobei der Anforderungsschritt umfasst Anfordern, dass eine Identifizierung von einem Nutzer bereitgestellt wird, wobei die Identifizierung fähig ist, mit weiteren Login-Routinen geteilt oder von ihnen weitergereicht zu werden.

13. Verfahren gemäß Ansprüchen 10 oder 11, wobei der Anforderungsschritt umfasst Abfragen eines Nutzernamens von einem Nutzer.

14. Verfahren gemäß Ansprüchen 10 oder 11, wobei der Schritt des Verwendens der Identifizierung umfasst Weitergeben der Identifizierung an einen Sicherheitsserver (95) zum Erstellen eines Public Keys für den Nutzer.

15. Verfahren gemäß Ansprüchen 10 oder 11, wobei der Schritt des Verwendens der Identifizierung umfasst Verwenden der Identifizierung zum Nachschlagen eines Zertifikats und Entschlüsseln des Zertifikats zum Erstellen eines Public Keys für den Nutzer.

16. Verfahren gemäß Anspruch 15, wobei das Zertifikat in einer Tabelle nachgeschlagen wird, die in einer ersten Netzressource gespeichert ist, und das Zertifikat über eine zweite Netzressource entschlüsselt wird.

17. Verfahren gemäß Ansprüchen 10 oder 11, wobei der Schritt des Verwendens der Identifizierung umfasst Übertragen einer Identifizierung an einen Datenverzeichnisserver (52g), wobei der Datenverzeichnisserver (52g) einen Zertifizierungsweg aussucht, welcher der Identifizierung entspricht, und den Zertifizierungsweg zurücksendet.

18. Verfahren gemäß Anspruch 17, wobei die Identifizierung vom Netzzwischensystem (67) übertragen wird und der Zertifizierungsweg an das Netzzwischensystem (67) zurückgesenden wird.

19. Verfahren gemäß Anspruch 10, wobei der Bestätigungsvorgang (89) zudem umfasst
Berechnen einer Antwort aus der Anfrage an einem Endsystem (500a-d), wobei die Antwort erfordert, dass ein Nutzer einen Private Key an einem Endsystem (500a-d) bereitstellt, wobei der Berechnungsschritt umfasst Verwenden des Private Keys für den Nutzer und eines Public Key/Private Key-Verschlüsselungsalgorithmus, um die Antwort zu Erstellen.

20. Verfahren gemäß Ansprüchen 10 oder 11, wobei der Schritt des Erstellens einer Anfrage umfasst Erstellen einer Zufallsnummer.

21. Verfahren gemäß Ansprüchen 10 oder 11, wobei der Schritt des Erstellens einer Anfrage umfasst Verwenden des Public Keys und des Public Key/Private Key-Verschlüsselungsalgorithmus zum Erstellen der Anfrage durch Verschlüsseln ener Nachricht, wobei die Anfrage die verschlüsselte Nachricht umfasst.

22. Verfahren gemäß Ansprüchen 10 oder 11, wobei der Schritt des Erstellens einer Anfrage von einem Sicherheitsserver (95) ausgeführt wird.

23. Verfahren gemäß Ansprüchen 10 oder 11, wobei der Überprüfungsschritt umfasst Entschlüsseln der Antwort mit dem Public Key und Vergleichen des Ergebnisses mit der Anfrage.

24. Verfahren gemäß Anspruch 23, wobei der Schritt des Entschlüsselns der Antwort von einem Sicherheitsserver (95) ausgeführt wird.

25. Verfahren gemäß Ansprüchen 10 oder 11, wobei der Schritt des Verwendens der Identifizierung umfasst Übertragen einer Identifizierung von Netzzwischensystem (67) an einen Datenverzeichnisserver (52g), wobei der Datenverzeichnisserver (52g) ein Zertifikat aussucht, welches der Identifizierung entspricht, und das Zertifikat an das Netzzwischensystem (67) zurücksendet.

26. Verfahren gemäß Ansprüchen 10 oder 11, wobei der Berechnungsschritt umfasst Verwenden eines Private Keys für den Nutzer und eines Public Key/Private Key-Verschlüsselungsalgorithmus zum Erstellen der Antwort.

27. Verfahren gemäß Ansprüchen 10 oder 11, wobei der Bestätigungsvorgang (89) zudem umfasst Filtern von Netzdaten für und von der beliebigen Schnittstelle (80a-d) auf Basis des Bestätigungszustands des Nutzers an dieser Schnittstelle (80a-d).

28. Verfahren gemäß Ansprüchen 10 oder 11, wobei der Überprüfungsschritt umfasst Vergleichen der Antwort mit einer erwarteten Antwort am Netzzwischensystem (67) mit einer Schnellvergleichsvorrichtung.

29. Verfahren gemäß Ansprüchen 10 oder 11, wobei der Überprüfungsschritt umfasst Entschlüsseln der Antwort mit dem Public Key und Vergleichen des Ergebnisses mit der Anfrage.

30. Sicherer Verteiler (67), umfassend
eine Schnittstellenzustandunbekannte, umfassend den Zustand für eine Schnittstelle (80a-d), die angibt, ob ein an die Schnittstelle (80a-d) angeschlossenes Endsystem (500a-d) bestätigt ist;
Mittel zum Ausführen eines Überprüfungsvorgangs (89), fähig zum Empfang einer Nutzeridentifizierung von einer Schnittstelle (80a-d) und zum Kommunizieren mit Netzeinrichtungen zum Empfang eines Public Key für den Nutzer und von Anfragedaten zur Anzeige an einer Schnittstelle (80a-d);
eine Überprüfungsvorrichtung zum Feststellen, op eine Antwort gültig ist durch Ausführen einer Operation an der Antwort und der Anfrage mit einem Public Key und einem Public Key/Private Key-Verschlüsselungsalgorithmus;
einen Komparator zum Vergleichen der Antwort von einem Endsystem auf eine Anfrage, und
eine Steuerung (82), fähig zum Einstellen eines Bestätigungsbits für eine Schnittstelle (80a-d) als Reaktion auf ein Ergebnis vom Komparator.

31. Sicherer Verteiler (67) gemäß Anspruch 30, wobei der sichere Verteiler (67) in einem paketvermittelten Kommunikationsnetz ist und wobei die Gültigkeit der vom Komparator verglichenen Antwort von einem geheimen Schlüssel abhängt, der am Endsystem (500a-d) bekannt ist.

32. Sicherer Verteiler (67) gemäß Ansprüchen 30 oder 31, zudem umfassend einen zweiten Zustand, der angibt, ob mindestens eine Schnittstelle (80a-d) eine ungeschützte Schnittstelle ist, aus der Daten von unbestätigten Schnittstellen (80a-d) übertragen werden können.

33. Sicherer Verteiler (67) gemäß irgendeinem der Ansprüche 30, 31 oder 32, wobei die Überprüfungsvorrichtung aus der Anfrage eine Antwort an einem physisch identifizierten Endsystem (500a-d) berechnet, wobei die Antwort erfordert, dass ein Nutzer einen Private Key am Endsystem (500a-d) bereitstellt, wobei das Berechnend er Antwort erfordert, dass ein menschlicher Nutzer am Endsystem (500a-d) einen Private Key bereitstellt, der auf einem physischen Medium gespeichert ist, das am Endsystem (500a-d) vorhanden sein muss.

34. Sicherer Verteiler (67) gemäß Anspruch 30, 31, 32 oder 33, wobei das Mittel zum Ausführen eines Überprüfungsvorgangs (89) ermöglicht, dass Datenpakete von einem Nutzer übertragen oder empfangen werden können, ohne dass in den Datenpaketen Nutzeridentifizierungs- oder Schnittstellenidentifizierungsinformation enthalten ist, und ohne dass das Netzzwischensystem (67) einen Zusammenhang zwischen dem Nutzer und einer entsprechenden Schnittstelle (80a-d) des paketvermittelten Kommunikationsnetzes herstellen und unterhalten muss.

35. Sicherer Verteiler (67) gemäß Anspruch 30, 31, 32, 33 oder 34, wobei das Mittel zum Ausführen eines Überprüfungsvorgangs (89) ausgelegt ist zum
Anfordern einer Identifizierung;
Verwenden der Identifizierung, um einen Public Key zur Verschlüsselung für einen Nutzer zu erstellen;
Erstellen einer Anfrage durch das Netz für den Nutzer;
Anzeigen der Anfrage an den Nutzer;
Erhalten einer Antwort vom Nutzer auf die Anfrage, wobei die Antwort beim Nutzer erstellt wird durch Berechnen der Anfrage mit einem Private Key;
Überprüfen der Antwort durch Ausführen einer Operation an der Antwort und der Anfrage; und
Bestätigen des Nutzers, erst wenn die Überprüfung ergibt, dass der Private Key dem Public Key entspricht.

36. Sicherer Verteiler gemäß Anspruch 35, wobei
das Anfordern der Identifizierung umfasst Anfordern einer Identifizierung über das Netzzwischensystem (67) vom Nutzer, der an einer bestimmten Schnittstelle angeschlossen ist und Erhalten der Identifizierung des Nutzers am Netzzwischensystem (67);
das Verwenden der Identifizierung, um einen Public Key zur Verschlüsselung für den Nutzer zu erstellen, umfasst Verwenden der Identifizierung vom Netzzwischensystem;
das Anzeigen der Anfrage umfasst Anzeigen der Anfrage vom Netzzwischensystem (67);
das Erhalten einer Antwort vom Nutzer auf die Anfrage umfasst Erhalten einer Antwort vom Nutzer am Netzzwischensystem (67), und der Private Key ist vom Nutzer geliefert;
das Überprüfen der Antwort durch Ausführen einer Operation umfasst Überprüfen über das Netzzwischensystem (67) der Antwort durch Ausführen einer Verfahrensoperation an der Antwort und der Anfrage mit dem Public Key, der mit dem Nutzer zusammenhängt; und
das Bestätigen des Nutzers umfasst Bestätigen des Nutzers über das Netzzwischensystem (67),
und das Mittel zum Ausführen eines Überprüfungsvorgangs (89) zudem ausgelegt ist zum
Berechnen einer Antwort auf einem physisch identifizierten Endsystem (500a-d) aus der Anfrage, wobei die Antwort erfordert, dass ein Nutzer einen Private Key am Endsystem (500a-d) bereitstellt, wobei das Berechnen erfordert, dass ein menschlicher Nutzer einen Private Key am Endsystem (500a-d) bereitstellt, der auf einem physischen Medium gespeichert ist, das am Endsystem (500a-d) vorhanden ist.

37. Sicherer Verteiler gemäß Ansprüchen 35 oder 36, wobei das Anfordern umfasst Anfordern, dass eine Identifizierung von einem Nutzer bereitgestellt wird, wobei die Identifizierung fähig ist, mit weiteren Login-Routinen geteilt oder von ihnen weitergereicht zu werden.

38. Sicherer Verteiler gemäß Ansprüchen 35 oder 36, wobei das Anfordern umfasst Abfragen eines Nutzernamens von einem Nutzer.

39. Sicherer Verteiler gemäß Ansprüchen 35 oder 36, wobei das Verwenden der Identifizierung umfasst Weiterleiten der Identifizierung an einer Sicherheitsserver (95) zum Erstellen eines Public Keys für den Nutzer.

40. Sicherer Verteiler gemäß Ansprüchen 35 oder 36, wobei das Verwenden der Identifizierung umfasst Verwenden der Identifizierung zum Nachschlagen eines Zertifikats und Entschlüsseln des Zertifikats zum Erstellen eines Public Keys für den Nutzer.

41. Sicherer Verteiler gemäß Anspruch 40, wobei das Zertifikat in einer Tabelle nachgeschlagen wird, die in einer ersten Netzressource gespeichert ist und das Zertifikat über eine zweite Netzressource entschlüsselt wird.

42. Sicherer Verteiler gemäß Ansprüchen 35 oder 36, wobei das Verwenden der Identifizierung umfasst Übertragen einer Identifizierung an einen Datenverzeichnisserver (52g), wobei der Datenverzeichnisserver (52g) einen Zertifizierungsweg aussucht, welcher der Identifizierung entspricht, und den Zertifizierungsweg zurücksendet.

43. Sicherer Verteiler gemäß Anspruch 42, wobei die Identifizierung vom Netzzwischensystem (67) übertragen wird und der Zertifizierungsweg an das Netzzwischensystem (67) zurückgesendet wird.

44. Sicherer Verteiler gemäß Anspruch 35, wobei das Mittel zum Ausführen eines Überprüfungsvorgangs (89) zudem ausgelegt ist zum
Berechnen einer Antwort aus der Anfrage an einem Endsystem (500a-d), wobei die Antwort erfordert, dass ein Nutzer einen Private Key an einem Endsystem (500a-d) bereitstellt, wobei das Berechnen umfasst Verwenden des Private Keys für den Nutzer und eines Public Key/Private Key-Verschlüsselungsalgorithmus, um die Antwort zu Erstellen.

45. Sicherer Verteiler gemäß Ansprüchen 35 oder 36, wobei das Erstellen einer Anfrage umfasst Erstellen einer Zufallsnummer.

46. Sicherer Verteiler gemäß Ansprüchen 35 oder 36, wobei das Erstellen einer Anfrage umfasst Verwenden des Public Keys und des Public Key/Private Key-Verschlüsselungsalgorithmus zum Erstellen der Anfrage durch Verschlüsseln einer Nachricht, wobei die Anfrage die verschlüsselte Nachricht umfasst.

47. Sicherer Verteiler gemäß Ansprüchen 35 oder 36, wobei das Erstellen einer Anfrage von einem Sicherheitsserver (95) ausgeführt wird.

48. Sicherer Verteiler gemäß Ansprüchen 35 oder 36, wobei das Überprüfen umfasst Entschlüsseln der Antwort mit dem Public Key und Vergleichen des Ergebnisses mit der Anfrage.

49. Sicherer Verteiler gemäß Anspruch 48, wobei das Entschlüsseln der Antwort von einem Sicherheitsserver (95) ausgeführt wird.

50. Sicherer Verteiler gemäß Ansprüchen 35 oder 36, wobei das Verwenden der Identifizierung umfasst Übertragen einer Identifizierung von Netzzwischensystem (67) an einen Datenverzeichnisserver (52g), wobei der Datenverzeichnisserver (52g) ein Zertifikat aussucht, welches der Identifizierung entspricht, und das Zertifikat an das Netzzwischensystem (67) zurücksendet.

51. Sicherer Verteiler gemäß Anspruch 36, wobei das Berechnen umfasst Verwenden des Private Keys für den Nutzer und eines Public Key/Private Key-Verschlüsselungsalgorithmus zum Erstellen der Antwort.

52. Sicherer Verteiler gemäß Ansprüchen 35 oder 36, wobei das Mittel zum Ausführen eines Überprüfungsvorgangs (89) zudem ausgelegt ist zum Filtern von Netzdaten für und von einer beliebigen Schnittstelle (80a-d) auf Basis des Bestätigungszustands des Nutzers an dieser Schnittstelle (80a-d).

53. Sicherer Verteiler gemäß Ansprüchen 35 oder 36, wobei das Überprüfen umfasst Vergleichen der Antwort mit einer erwarteten Antwort am Netzzwischensystem (67) mit einer Schnellvergleichsvorrichtung.

54. Sicherer Verteiler gemäß Ansprüchen 35 oder 36, wobei das Überprüfen umfasst Entschlüsseln der Antwort mit dem Public Key und Vergleichen des Ergebnisses mit der Anfrage.

55. Netz mit verbesserter Sicherheit, umfassend
ein mit einem Nutzer interagierendes Endsystem (500a-d);
eine Zustandsunbekannte, enthaltend einen Zustand, der angibt, ob ein angeschlossenes Endsystem (500a-d) bestätigt worden ist;
einen sicheren Verteiler (67), der einen privaten Anschluss zwischen dem Endsystem (500a-d) und Netzdaten bereitstellt, und fähig ist, Daten zum Endsystem (500a-d) zu filtern, auf Basis eines Bestätigungszustands für das Endsystem (500a-d);
Mittel zum Ausführen eines Bestätigungsvorgangs (89), fähig zum Empfang einer Nutzeridentifizierung von einem Endsystem (500a-d) und zum Aussuchen eines Mechanismus zum Erstellen einer Anfrage zur Anzeige an einem Endsystem (500a-d);
einen Komparator zum Vergleichen der Antwort von einem Endsystem auf eine Anfrage, wobei die Gültigkeit der Antwort von einem geheimen Schlüssel abhängt, der am Endsystem bekannt ist; und
eine Steuerung (82), fähig zum Einstellen eines Bestätigungsbits für ein Endsystem (500a-d) als Reaktion auf ein Ergebnis vom Komparator.

56. Netz gemäß Anspruch 55, wobei das Netz ein paketvermitteltes Kommunikationsnetz ist.

57. Netz gemäß Ansprüchen 55 oder 56, wobei das Mittel zum Ausführen eines Überprüfungsvorgangs (89) ausgelegt ist zum Berechnen einer Antwort aus der Anfrage am Endsystem (500a-d), wobei die Antwort erfordert, dass ein Nutzer einen Private Key am Endsystem (500a-d) bereitstellt, wobei das Berechnen der Antwort erfordert, dass ein menschlicher Nutzer einen Private Key am Endsystem (500a-d) bereitstellt, der auf einer physischen Vorrichtung gespeichert ist, die am Endsystem (500a-d) vorhanden ist.

58. Netz gemäß Anspruch 55, 56 oder 57, wobei das Mittel zum Ausführen eines Überprüfungsvorgangs (89) ermöglicht, dass Datenpakete von einem Nutzer übertragen und empfangen werden können, ohne dass in den Datenpaketen Nutzeridentifzierungs- oder Schnittstellenidentifizierungsinformation enthalten ist und ohne dass das Netzzwischensystem (67) einen Zusammenhang zwischen dem Nutzer und der Schnittstelle (80a-d) des paketvermittelten Kommunikationsnetzes herstellen oder unterhalten muss.

59. Netz gemäß Anspruch 55, 56, 57 oder 58, wobei das Mittel zum Ausführen eines Überprüfungsvorgangs (89) ausgelegt ist zum
Anfordern einer Identifizierung;
Verwenden der Identifizierung, um einen Public Key zur Verschlüsselung für einen Nutzer zu erstellen;
Erstellen einer Anfrage durch das Netz für den Nutzer;
Anzeigen der Anfrage an den Nutzer;
Erhalten einer Antwort vom Nutzer auf die Anfrage, wobei die Antwort beim Nutzer erstellt wird durch Berechnen der Anfrage mit einem Private Key;
Überprüfen der Antwort durch Ausführen einer Operation an der Antwort und der Anfrage; und
Bestätigen des Nutzers, erst wenn die Überprüfung ergibt, dass der Private Key dem Public Key entspricht.

60. Netz gemäß Anspruch 59, wobei
das Anfordern der Identifizierung umfasst Anfordern einer Identifizierung über das Netzzwischensystem (67) vom Nutzer, der an einer bestimmten Schnittstelle angeschlossen ist und Erhalten der Identifizierung des Nutzers am Netzzwischensystem (67);
das Verwenden der Identifizierung, um einen Public Key zur Verschlüsselung für den Nutzer zu erstellen, umfasst Verwenden der Identifizierung vom Netzzwischensystem;
das Anzeigen der Anfrage umfasst Anzeigen der Anfrage vom Netzzwischensystem (67);
das Erhalten einer Antwort vom Nutzer auf die Anfrage umfasst Erhalten einer Antwort vom Nutzer am Netzzwischensystem (67), und der Private Key ist vom Nutzer geliefert;
das Überprüfen der Antwort durch Ausführen einer Operation umfasst Überprüfen über das Netzzwischensystem (67) der Antwort durch Ausführen einer Verfahrensoperation an der Antwort und der Anfrage mit dem Public Key, der mit dem Nutzer zusammenhängt; und
das Bestätigen des Nutzers umfasst Bestätigen des Nutzers über das Netzzwischensystem (67),
und der Überprüfungsvorgang (89) zudem umfasst
Berechnen einer Antwort auf einem physisch identifizierten Endsystem (500a-d) aus der Anfrage, wobei die Antwort erfordert, dass ein Nutzer einen Private Key am Endsystem (500a-d) bereitstellt, wobei das Berechnen erfordert, dass ein menschlicher Nutzer am Endsystem (500a-d) einen Private Key bereitstellt, der auf einer physischen Vorrichtung gespeichert ist, die am Endsystem (500a-d) vorhanden ist.

61. Netz gemäß Ansprüchen 59 oder 60, wobei das Anfragen umfasst Anfragen, dass eine Identifizierung von einem Nutzer bereitgestellt wird, wobei die Identifizierung fähig ist, mit weiteren Login-Routinen geteilt oder von ihnen weitergereicht zu werden.

62. Netz gemäß Ansprüchen 59 oder 60, wobei das Anfragen umfasst Abfragen eines Nutzernamens von einem Nutzer.

63. Netz gemäß Ansprüchen 59 oder 60, wobei das Verwenden der Identifizierung umfasst Weiterleiten der Identifizierung an einen Sicherheitsserver (95) zum Erstellen eines Public Keys für den Nutzer.

64. Netz gemäß Ansprüchen 59 oder 60, wobei das Verwenden der Identifizierung umfasst Verwenden der Identifizierung zum Nachschlagen eines Zertifikats und Entschlüsseln des Zertifikats zum Erstellen eines Public Keys für den Nutzer.

65. Netz gemäß Anspruch 64, wobei das Zertifikat in einer Tabelle nachgeschlagen wird, die in einer ersten Netzressource gespeichert ist und das Zertifikat über eine zweite Netzressource entschlüsselt wird.

66. Netz gemäß Ansprüchen 59 oder 60, wobei das Verwenden der Identifizierung umfasst Übertragen einer Identifizierung an einen Datenverzeichnisserver (52g), wobei der Datenverzeichnisserver (52g) einen Zertifizierungsweg aussucht, welcher der Identifizierung entspricht, und den Zertifizierungsweg zurücksendet.

67. Netz gemäß Anspruch 66, wobei die Identifizierung vom Netzzwischensystem (67) übertragen wird und der Zertifizierungsweg an das Netzzwischensystem (67) zurückgegeben wird.

68. Netz gemäß Anspruch 59, wobei das Mittel zum Ausführen eines Überprüfungsvorgangs (89) zudem ausgelegt ist zum
Berechnen einer Antwort aus der Anfrage an einem Endsystem (500a-d), wobei die Antwort erfordert, dass ein Nutzer einen Private Key am Endsystem (500a-d) bereitstellt, wobei das Berechnen umfasst Verwenden eines Private Keys für den Nutzer und eines Public Key/Private Key-Verschlüsselungsalgorithmus um die Antwort zu Erstellen.

69. Netz gemäß Ansprüchen 59 oder 60, wobei das Erstellen einer Anfrage umfasst Erstellen einer Zufallsnummer.

70. Netz gemäß Ansprüchen 59 oder 60, wobei das Erstellen einer Anfrage umfasst Verwenden des Public Keys und des Public Key/Private Key-Verschlüsselungsalgorithmus zum Erstellen der Anfrage durch Verschlüsseln einer Nachricht, wobei die Anfrage die verschlüsselte Nachricht umfasst.

71. Netz gemäß Ansprüchen 59 oder 60, wobei das Erstellen einer Anfrage von einem Sicherheitsserver (95) ausgeführt wird.

72. Netz gemäß Ansprüchen 59 oder 60, wobei das Überprüfen umfasst Entschlüsseln der Antwort mit dem Public Key und Vergleichen des Ergebnisses mit der Anfrage.

73. Netz gemäß Anspruch 72, wobei das Entschlüsseln der Antwort von einem Sicherheitsserver (95) ausgeführt wird.

74. Netz gemäß Ansprüchen 59 oder 60, wobei der Schritt des Verwendens der Identifizierung umfasst Übertragen einer Identifizierung von Netzzwischensystem (67) an einen Datenverzeichnisserver (52g), wobei der Datenverzeichnisserver (52g) ein Zertifikat aussucht, welches der Identifizierung entspricht, und das Zertifikat an das Netzzwischensystem (67) zurücksendet.

75. Netz gemäß Ansprüchen 59 oder 60, wobei das Berechnen umfasst Verwenden des Private Keys für den Nutzer und eines Public Key/Private Key-Verschlüsselungsalgorithmus zum Erstellen der Antwort.

76. Netz gemäß Ansprüchen 59 oder 60, wobei der Überprüfungsvorgang (89) zudem umfasst Filtern von Netzdaten für und von einer beliebigen Schnittstelle (80a-d) auf Basis des Bestätigungszustands des Nutzers an dieser Schnittstelle (80a-d).

77. Netz gemäß Ansprüchen 59 oder 60, wobei der Überprüfungsschritt umfasst Vergleichen der Antwort mit einer erwarteten Antwort am Netzzwischensystem (67) mit einer Schnellvergleichsvorrichtung.

78. Netz gemäß Ansprüchen 59 oder 60, wobei der Überprüfungsschritt umfasst Entschlüsseln der Antwort mit dem Public Key und Vergleichen des Ergebnisses mit der Anfrage.

79. Netz gemäß Anspruch 55, 56 oder 57 wobei das Netz ein lokales Netz ist.

80. Verfahren gemäß Anspruch 1, 2, 3, 4, 5 oder 6, wobei der Bestätigungsschritt einer Schnittstelle (80a-d) umfasst Empfangen von Nutzerüberprüfungsdaten von der Schnittstelle (80a-d) und Überprüfen der Überprüfungsdaten, und wobei der Erfassungsschritt umfasst Erfassen der Wiederaufnahme von Link-Beat an einer Schnittstelle (80a-d).

81. Verfahren gemäß Anspruch 80, wobei der Überprüfungsschritt umfasst Übertragen von Überprüfungsdaten an einen Login-Server (64) am Netz und Empfangen einer Bestätigung vom Login-Server (64).

82. Verfahren gemäß Anspruch 80, wobei der Überprüfungsschritt umfasst Anzeigen einer Anfrage auf der Schnittstelle (80a-d), die anfragt, dass sie Schnittstelle (80a-d) einen Geheimwert bereitstellt, der nur einem bestätigten Nutzer bekannt sein kann.

83. Verfahren gemäß Anspruch 80, wobei nach Überprüfung an der Schnittstelle (80a-d) Überprüfungsdaten von einem Betriebssystem am Endsystem (500a-d) verwendet werden, um einen Nutzer auf weiteren Netzressourcen zu überprüfen.

84. Verfahren gemäß Anspruch 1, 2, 3, oder 4, wobei das Zwischensystem (67) ermöglicht, dass vor Bestätigung der Schnittstelle (80a-d) eine begrenzte Datenmenge von der Schnittstelle (80a-d) übertragen und empfangen werden kann.

85. Verfahren gemäß Anspruch 1, 2, 3, oder 4, zudem umfassend Begrenzen der Datenübertragung mit einer unbestätigten Schnittstelle (80a-d) zu einer Untergruppe anderer Schnittstellen (80a-d), die als unsichere Schnittstellen (80a-d) bezeichnet sind.

86. Rechnerlesbares Medium (717), enthaltend Computerprogrammcode, welcher, wenn auf ein entsprechend ausgestattetes Netzzwischensystem (67) hochgeladen und hier ausgeführt, erlaubt, dass das Netzzwischensystem (67) das Verfahren aus irgendeinem der Ansprüche 1 bis 29 und 80 bis 85 ausführt.

## Revendications

1. Procédé pour un système intermédiaire (67) dans un réseau limitant la transmission ou réception de données avec un utilisateur non autorisé comprenant :
dans un système intermédiaire de réseau (67) ayant une pluralité de ports (80a à d) pour la connexion à des segments de réseau (72a à d), le stockage d'une indication pour chaque port (80a à d) indiquant si ledit port (80a à d) est authentifié ou non authentifié ; et
avant de transmettre ou recevoir librement des données de réseau sur l'un quelconque dit port (80a à d), la réalisation d'un processus d'authentification (89) pour authentifier ledit port (80a à d) lorsqu'une connexion physique est détectée sur un port non authentifié ou lorsqu'une tentative est faite de transmettre des données sur un port non authentifié.

2. Procédé selon la revendication 1, dans lequel ledit réseau est un réseau de communication à commutation de paquets et ledit procédé est pour l'amélioration de la sécurité du réseau.

3. Procédé selon la revendication 1 ou 2, dans lequel ledit processus d'authentification (89) authentifie chaque utilisateur au niveau du port (80a à d) auquel ledit utilisateur est connecté.

4. Procédé selon l'une quelconque des revendications 1, 2 ou 3, dans lequel une fois que ledit utilisateur est authentifié, permettant à des paquets de données d'être transmis ou reçus par ledit utilisateur sans inclure d'informations d'identification de l'utilisateur ou d'identification du port dans lesdits paquets de données et sans nécessiter ledit système intermédiaire de réseau (67) de créer et maintenir une association entre ledit utilisateur et un port correspondant (80a à d) dudit réseau.

5. Procédé selon l'une quelconque des revendications 1, 2, 3 ou 4, dans lequel ledit procédé comprend en outre :
la détection du moment où un système terminal (500a à d) n'est pas présent ou est redémarré sur un port (80a à d) et le réglage de ce port (80a à d) sur un état non authentifié.

6. Procédé selon l'une quelconque des revendications 1, 2, 3 ou 4, dans lequel ledit procédé prévoit que des informations d'identification de l'utilisateur ou d'identification du port ne soient pas incluses dans des paquets de données qui sont finalement transmis dans ledit réseau.

7. Procédé pour l'amélioration de la sécurité du réseau comprenant :
au niveau d'un système intermédiaire de réseau (67) auquel un système terminal de réseau (500a à d) se connecte, le stockage de l'état indiquant si un port de réseau (80a à d) connectant ledit système intermédiaire de réseau (67) à un système terminal (500a à d) est authentifié ;
le réglage initial dudit état sur un état non authentifié à la mise sous tension du système intermédiaire (67) ou tel que programmé par un gestionnaire de réseau ;
avant une transmission ou réception illimitée de données de réseau à travers ledit système intermédiaire de réseau (67) vers un port non authentifié (80a à d), la réalisation d'un processus d'authentification (89) sur ledit port (80a à d) ;
la réinitialisation d'un état d'authentification vers un état non authentifié lorsqu'une interruption de la connexion physique entre un port (80a à d) et un système terminal (500a à d) est détectée ; et
le réglage dudit état sur un état authentifié uniquement lorsque ledit processus d'authentification (89) renvoie un message selon lequel l'authentification a été validée.

8. Procédé selon la revendication 7, dans lequel ledit procédé est pour l'amélioration de la sécurité du réseau dans un réseau de communication à commutation de paquets et dans lequel ledit processus d'authentification (89) comprend l'utilisation d'un algorithme de chiffrement à clé publique/clé privée pour déterminer qu'un système terminal (500a à d) connecté à un port non authentifié (80a à d) est en possession d'une clé privée valide, ledit processus d'authentification (89) calculant également une réponse au niveau dudit système terminal (500a à d) à partir d'une demande d'accès, ladite réponse nécessitant un utilisateur humain de fournir au niveau dudit système terminal (500a à d) une clé privée qui est stockée sur un dispositif physique qui doit être présent au niveau dudit système terminal (500a à d).

9. Procédé selon la revendication 7 ou 8, dans lequel ledit processus d'authentification (89) permet à des paquets de données d'être transmis ou reçus par un utilisateur sans inclure d'informations d'identification de l'utilisateur ou d'identification du port dans lesdits paquets de données et sans nécessiter ledit système intermédiaire de réseau (67) de créer et maintenir une association entre ledit utilisateur et un port correspondant (80a à d) dudit réseau de communication à commutation de paquets.

10. Procédé selon la revendication 1, 2, 3, 4, 5, 6, 7, 8 ou 9, dans lequel le processus d'authentification (89) comprend :
la requête d'une identification ;
l'utilisation de ladite identification pour déterminer une clé de chiffrement publique pour un utilisateur ;
la génération d'une demande d'accès par ledit réseau pour ledit utilisateur ;
la présentation de ladite demande d'accès audit utilisateur ;
la réception dudit utilisateur d'une réponse à ladite demande d'accès, ladite réponse étant générée au niveau dudit utilisateur en opérant sur ladite demande d'accès en utilisant une clé privée ;
la vérification de ladite réponse en réalisant une opération sur ladite réponse et ladite demande d'accès ; et
l'authentification dudit utilisateur uniquement si ladite vérification indique que ladite clé privée correspond à ladite clé publique.

11. Procédé selon la revendication 10, dans lequel :
la requête d'une identification comprend la requête par le biais dudit système intermédiaire de réseau (67) d'une identification provenant dudit utilisateur connecté au niveau d'un port spécifique et la réception au niveau dudit système intermédiaire de réseau (67) de ladite identification provenant dudit utilisateur ;
l'utilisation de ladite identification pour déterminer une clé de chiffrement publique pour ledit utilisateur comprend l'utilisation à partir dudit système intermédiaire de réseau de ladite identification ;
la présentation de ladite demande d'accès comprend la présentation de ladite demande d'accès provenant dudit système intermédiaire de réseau (67) ;
la réception dudit utilisateur d'une réponse à ladite demande d'accès comprend la réception dudit utilisateur au niveau dudit système intermédiaire de réseau (67) d'une réponse et ladite clé privée est fournie par ledit utilisateur ;
la vérification de ladite réponse en réalisant une opération comprend la vérification par le biais dudit système intermédiaire de réseau (67) de ladite réponse en réalisant une opération de traitement sur ladite réponse et ladite demande d'accès en utilisant ladite clé publique associée audit utilisateur ; et
l'authentification dudit utilisateur comprend l'authentification dudit utilisateur par le biais dudit système intermédiaire de réseau (67),
et ledit processus d'authentification (89) comprend en outre :
le calcul d'une réponse au niveau d'un système terminal physiquement identifié (500a à d) à partir de ladite demande d'accès, ladite réponse nécessitant un utilisateur de fournir une clé privée au niveau dudit système terminal (500a à d), dans lequel ladite étape de calcul nécessite un utilisateur humain de fournir au niveau dudit système terminal (500a à d) une clé privée qui est stockée sur un dispositif physique qui doit être présent au niveau dudit système terminal (500a à d).

12. Procédé selon la revendication 10 ou 11, dans lequel ladite étape de requête comprend la requête d'une identification devant être fournie par un utilisateur, dans lequel ladite identification est capable d'être partagée avec ou de provenir d'autres routines d'ouverture de session.

13. Procédé selon la revendication 10 ou 11, dans lequel ladite étape de requête comprend la sollicitation d'un utilisateur pour un nom d'utilisateur.

14. Procédé selon la revendication 10 ou 11, dans lequel ladite étape d'utilisation de ladite identification comprend le passage de ladite identification à un serveur de sécurité (95) pour déterminer une clé publique pour ledit utilisateur.

15. Procédé selon la revendication 10 ou 11, dans lequel ladite étape d'utilisation de ladite identification comprend l'utilisation de ladite identification pour consulter un certificat et le décodage de ce certificat pour déterminer une clé publique pour ledit utilisateur.

16. Procédé selon la revendication 15, dans lequel ledit certificat est consulté dans une table stockée dans une première ressource de réseau et ledit certificat est décodé par le biais d'une seconde ressource de réseau.

17. Procédé selon la revendication 10 ou 11, dans lequel ladite étape d'utilisation de ladite identification comprend la transmission d'une identification à un serveur de répertoire (52g), ledit serveur de répertoire (52g) récupérant un chemin de certification qui correspond à ladite identification et renvoyant ledit chemin de certification.

18. Procédé selon la revendication 17, dans lequel ladite identification est transmise depuis ledit système intermédiaire de réseau (67) et ledit chemin de certification est renvoyé vers ledit système intermédiaire de réseau (67).

19. Procédé selon la revendication 10, dans lequel ledit processus d'authentification (89) comprend en outre :
le calcul d'une réponse au niveau d'un système terminal (500a à d) à partir de ladite demande d'accès, ladite réponse nécessitant un utilisateur de fournir une clé privée au niveau d'un système terminal (500a à d), dans lequel ladite étape de calcul comprend l'utilisation d'une clé privée pour ledit utilisateur et d'un algorithme de chiffrement à clé publique/clé privée pour générer ladite réponse.

20. Procédé selon la revendication 10 ou 11, dans lequel ladite étape de génération d'une demande d'accès comprend la génération d'un nombre aléatoire.

21. Procédé selon la revendication 10 ou 11, dans lequel ladite étape de génération d'une demande d'accès comprend l'utilisation de ladite clé publique et dudit algorithme de chiffrement à clé publique/clé privée pour générer ladite demande d'accès en cryptant un message, ladite demande d'accès comprenant ledit message crypté.

22. Procédé selon la revendication 10 ou 11, dans lequel ladite étape de génération d'une demande d'accès est réalisée par un serveur de sécurité (95).

23. Procédé selon la revendication 10 ou 11, dans lequel ladite étape de vérification comprend le décryptage de ladite réponse en utilisant ladite clé publique et la comparaison du résultat à ladite demande d'accès.

24. Procédé selon la revendication 23, dans lequel ledit décryptage de ladite réponse est réalisé par un serveur de sécurité (95).

25. Procédé selon la revendication 10 ou 11, dans lequel ladite étape d'utilisation de ladite identification comprend la transmission d'une identification provenant dudit système intermédiaire de réseau (67) à un serveur de répertoire (52g), ledit serveur de répertoire (52g) récupérant un certificat qui correspond à ladite identification et renvoyant ledit certificat audit système intermédiaire de réseau (67).

26. Procédé selon la revendication 10 ou 11, dans lequel ladite étape de calcul comprend l'utilisation d'une clé privée pour ledit utilisateur et d'un algorithme de chiffrement à clé publique/clé privée pour générer ladite réponse.

27. Procédé selon la revendication 10 ou 11, dans lequel le processus d'authentification (89) comprend en outre le filtrage de données de réseau vers et en provenance dudit port arbitraire (80a à d) en fonction du statut d'authentification de l'utilisateur au niveau de ce port (80a à d).

28. Procédé selon la revendication 10 ou 11, dans lequel l'étape de vérification comprend la comparaison de ladite réponse à une réponse attendue au niveau dudit système intermédiaire de réseau (67) en utilisant un moteur de comparaison rapide.

29. Procédé selon la revendication 10 ou 11, dans lequel ladite étape de vérification comprend le décryptage de ladite réponse en utilisant ladite clé publique et la comparaison du résultat à ladite demande d'accès.

30. Concentrateur sécurisé (67) comprenant :
une variable d'état de port contenant l'état pour un port (80a à d) indiquant si un système terminal (500a à d) connecté audit port (80a à d) a été authentifié ;
des moyens pour effectuer un processus d'authentification (89) capable de recevoir une identification d'utilisateur d'un port (80a à d) et de communiquer avec des dispositifs en réseau afin de recevoir une clé publique pour ledit utilisateur et des données de demande d'accès à présenter à un port (80a à d) ;
un moteur de vérification pour déterminer si une réponse est valide en opérant sur ladite réponse et ladite demande d'accès en utilisant ladite clé publique et un algorithme de chiffrement à clé publique/clé privée ;
un comparateur pour comparer une réponse provenant d'un système terminal à une demande d'accès, et
un contrôleur (82) capable de régler un bit d'authentification pour un port (80a à d) en réponse à un résultat provenant dudit comparateur.

31. Concentrateur sécurisé (67) selon la revendication 30, dans lequel ledit concentrateur sécurisé (67) est dans un réseau de communication à commutation de paquets et la validité de ladite réponse comparée par ledit comparateur dépend d'une clé secrète qui est connue au niveau dudit système terminal (500a à d).

32. Concentrateur sécurisé (67) selon la revendication 30 ou 31, comprenant en outre un second état indiquant si au moins un port (80a à d) est un port non protégé duquel des données provenant de ports non authentifiés (80a à d) peuvent être transmises.

33. Concentrateur sécurisé selon l'une quelconque des revendications 30, 31 ou 32, dans lequel ledit moteur de vérification calcule une réponse au niveau d'un système terminal physiquement identifié (500a à d) à partir de ladite demande d'accès, ladite réponse nécessitant un utilisateur de fournir une clé privée au niveau dudit système terminal (500a à d), dans lequel ledit calcul de ladite réponse nécessite un utilisateur humain de fournir au niveau dudit système terminal (500a à d) une clé privée qui est stockée sur un dispositif physique qui doit être présent au niveau dudit système terminal (500a à d).

34. Concentrateur sécurisé (67) selon la revendication 30, 31, 32 ou 33, dans lequel lesdits moyens pour effectuer un processus d'authentification (89) permettent à des paquets de données d'être transmis ou reçus par un utilisateur sans inclure d'informations d'identification de l'utilisateur ou d'identification du port dans lesdits paquets de données et sans nécessiter ledit système intermédiaire de réseau (67) de créer et maintenir une association entre ledit utilisateur et un port correspondant (80a à d) dudit réseau de communication à commutation de paquets.

35. Concentrateur sécurisé (67) selon la revendication 30, 31, 32, 33 ou 34, dans lequel lesdits moyens pour effectuer un processus d'authentification (89) sont adaptés à :
requérir une identification ;
utiliser ladite identification pour déterminer une clé de chiffrement publique pour un utilisateur ;
générer une demande d'accès par ledit réseau pour ledit utilisateur ;
présenter ladite demande d'accès audit utilisateur ;
recevoir dudit utilisateur une réponse à ladite demande d'accès, ladite réponse étant générée au niveau dudit utilisateur en opérant sur ladite demande d'accès en utilisant une clé privée ;
vérifier ladite réponse en réalisant une opération sur ladite réponse et ladite demande d'accès ; et
authentifier ledit utilisateur uniquement si ladite vérification indique que ladite clé privée correspond à ladite clé publique.

36. Concentrateur sécurisé selon la revendication 35, dans lequel :
la requête d'une identification comprend la requête par le biais dudit système intermédiaire de réseau (67) d'une identification provenant dudit utilisateur connecté au niveau d'un port spécifique et la réception au niveau dudit système intermédiaire de réseau (67) de ladite identification provenant dudit utilisateur ;
l'utilisation de ladite identification pour déterminer une clé de chiffrement publique pour ledit utilisateur comprend l'utilisation à partir dudit système intermédiaire de réseau de ladite identification ;
la présentation de ladite demande d'accès comprend la présentation de ladite demande d'accès provenant dudit système intermédiaire de réseau (67) ;
la réception dudit utilisateur d'une réponse à ladite demande d'accès comprend la réception dudit utilisateur au niveau dudit système intermédiaire de réseau (67) d'une réponse et ladite clé privée est fournie par ledit utilisateur ;
la vérification de ladite réponse en réalisant une opération comprend la vérification par le biais dudit système intermédiaire de réseau (67) de ladite réponse en réalisant une opération de traitement sur ladite réponse et ladite demande d'accès en utilisant ladite clé publique associée audit utilisateur ; et
l'authentification dudit utilisateur comprend l'authentification dudit utilisateur par le biais dudit système intermédiaire de réseau (67),
et lesdits moyens pour effectuer un processus d'authentification (89) sont en outre adaptés à :
calculer une réponse au niveau d'un système terminal physiquement identifié (500a à d) à partir de ladite demande d'accès, ladite réponse nécessitant un utilisateur de fournir une clé privée au niveau dudit système terminal (500a à d), dans lequel ledit calcul nécessite un utilisateur humain de fournir au niveau dudit système terminal (500a à d) une clé privée qui est stockée sur un dispositif physique qui doit être présent au niveau dudit système terminal (500a à d).

37. Concentrateur sécurisé selon la revendication 35 ou 36, dans lequel ladite requête comprend la requête d'une identification devant être fournie par un utilisateur, dans lequel ladite identification est capable d'être partagée avec ou de provenir d'autres routines d'ouverture de session.

38. Concentrateur sécurisé selon la revendication 35 ou 36, dans lequel ladite requête comprend la sollicitation d'un utilisateur pour un nom d'utilisateur.

39. Concentrateur sécurisé selon la revendication 35 ou 36, dans lequel ladite utilisation de ladite identification comprend le passage de ladite identification à un serveur de sécurité (95) pour déterminer une clé publique pour ledit utilisateur.

40. Concentrateur sécurisé selon la revendication 35 ou 36, dans lequel ladite utilisation de ladite identification comprend l'utilisation de ladite identification pour consulter un certificat et le décodage de ce certificat pour déterminer une clé publique pour ledit utilisateur.

41. Concentrateur sécurisé selon la revendication 40, dans lequel ledit certificat est consulté dans une table stockée dans une première ressource de réseau et ledit certificat est décodé par le biais d'une seconde ressource de réseau.

42. Concentrateur sécurisé selon la revendication 35 ou 36, dans lequel ladite utilisation de ladite identification comprend la transmission d'une identification à un serveur de répertoire (52g), ledit serveur de répertoire (52g) récupérant un chemin de certification qui correspond à ladite identification et renvoyant ledit chemin de certification.

43. Concentrateur sécurisé selon la revendication 42, dans lequel ladite identification est transmise depuis ledit système intermédiaire de réseau (67) et ledit chemin de certification est renvoyé vers ledit système intermédiaire de réseau (67).

44. Concentrateur sécurisé selon la revendication 35, dans lequel lesdits moyens pour effectuer un processus d'authentification (89) sont en outre adaptés à :
calculer une réponse au niveau d'un système terminal (500a à d) à partir de ladite demande d'accès, ladite réponse nécessitant un utilisateur de fournir une clé privée au niveau d'un système terminal (500a à d), dans lequel ledit calcul comprend l'utilisation d'une clé privée pour ledit utilisateur et d'un algorithme de chiffrement à clé publique/clé privée pour générer ladite réponse.

45. Concentrateur sécurisé selon la revendication 35 ou 36, dans lequel ladite génération d'une demande d'accès comprend la génération d'un nombre aléatoire.

46. Concentrateur sécurisé selon la revendication 35 ou 36, dans lequel ladite génération d'une demande d'accès comprend l'utilisation de ladite clé publique et dudit algorithme de chiffrement à clé publique/clé privée pour générer ladite demande d'accès en cryptant un message, ladite demande d'accès comprenant ledit message crypté.

47. Concentrateur sécurisé selon la revendication 35 ou 36, dans lequel ladite génération d'une demande d'accès est réalisée par un serveur de sécurité (95).

48. Concentrateur sécurisé selon la revendication 35 ou 36, dans lequel ladite vérification comprend le décryptage de ladite réponse en utilisant ladite clé publique et la comparaison du résultat à ladite demande d'accès.

49. Concentrateur sécurisé selon la revendication 48, dans lequel ledit décryptage de ladite réponse est réalisé par un serveur de sécurité (95).

50. Concentrateur sécurisé selon la revendication 35 ou 36, dans lequel ladite utilisation de ladite identification comprend la transmission d'une identification provenant dudit système intermédiaire de réseau (67) à un serveur de répertoire (52g), ledit serveur de répertoire (52g) récupérant un certificat qui correspond à ladite identification et renvoyant ledit certificat audit système intermédiaire de réseau (67).

51. Concentrateur sécurisé selon la revendication 36, dans lequel ledit calcul comprend l'utilisation d'une clé privée pour ledit utilisateur et d'un algorithme de chiffrement à clé publique/clé privée pour générer ladite réponse.

52. Concentrateur sécurisé selon la revendication 35 ou 36, dans lequel lesdits moyens pour effectuer un processus d'authentification (89) sont en outre adaptés à filtrer des données de réseau vers et en provenance dudit port arbitraire (80a à d) en fonction du statut d'authentification de l'utilisateur au niveau de ce port (80a à d).

53. Concentrateur sécurisé selon la revendication 35 ou 36, dans lequel la vérification comprend la comparaison de ladite réponse à une réponse attendue au niveau dudit système intermédiaire de réseau (67) en utilisant un moteur de comparaison rapide.

54. Concentrateur sécurisé selon la revendication 35 ou 36, dans lequel ladite vérification comprend le décryptage de ladite réponse en utilisant ladite clé publique et la comparaison du résultat à ladite demande d'accès.

55. Réseau ayant une sécurité accrue comprenant :
un système terminal (500a à d) en interaction avec un utilisateur ;
une variable d'état contenant l'état indiquant si un système terminal connecté (500a à d) a été authentifié ;
un concentrateur sécurisé (67) fournissant une connexion privée entre ledit système terminal (500a à d) et des données de réseau et capable de filtrer des données vers ledit système terminal (500a à d) en fonction d'un état d'authentification pour ledit système terminal (500a à d) ;
des moyens pour effectuer un processus d'authentification (89) capable de recevoir une identification d'utilisateur d'un système terminal (500a à d) et capable de récupérer un mécanisme pour générer une demande d'accès à présenter à un système terminal (500a à d) ;
un comparateur pour comparer une réponse provenant d'un système terminal à une demande d'accès, la validité de ladite réponse dépendant d'une clé secrète qui est connue au niveau dudit système terminal ; et
un contrôleur (82) capable de régler un bit d'authentification pour un système terminal (500a à d) en réponse à un résultat provenant dudit comparateur.

56. Réseau selon la revendication 55, dans lequel ledit réseau est un réseau de communication à commutation de paquets.

57. Réseau selon la revendication 55 ou 56, dans lequel les moyens pour effectuer un processus d'authentification (89) sont adaptés à calculer une réponse au niveau dudit système terminal (500a à d) à partir de ladite demande d'accès, ladite réponse nécessitant un utilisateur de fournir une clé privée au niveau dudit système terminal (500a à d), dans lequel ledit calcul de ladite réponse nécessite un utilisateur humain de fournir au niveau dudit système terminal (500a à d) une clé privée qui est stockée sur un dispositif physique qui doit être présent au niveau dudit système terminal (500a à d).

58. Réseau selon la revendication 55, 56 ou 57, dans lequel lesdits moyens pour effectuer un processus d'authentification (89) permettent à des paquets de données d'être transmis ou reçus par un utilisateur sans inclure d'informations d'identification de l'utilisateur ou d'identification du port dans lesdits paquets de données et sans nécessiter ledit système intermédiaire de réseau (67) de créer et maintenir une association entre ledit utilisateur et un port correspondant (80a à d) dudit réseau de communication à commutation de paquets.

59. Réseau selon la revendication 55, 56, 57 ou 58, dans lequel les moyens pour effectuer un processus d'authentification (89) sont adaptés à :
requérir une identification ;
utiliser ladite identification pour déterminer une clé de chiffrement publique pour un utilisateur ;
générer une demande d'accès par ledit réseau pour ledit utilisateur ;
présenter ladite demande d'accès audit utilisateur ;
recevoir dudit utilisateur une réponse à ladite demande d'accès, ladite réponse étant générée au niveau dudit utilisateur en opérant sur ladite demande d'accès en utilisant une clé privée ;
vérifier ladite réponse en réalisant une opération sur ladite réponse et ladite demande d'accès ; et
authentifier ledit utilisateur uniquement si ladite vérification indique que ladite clé privée correspond à ladite clé publique.

60. Réseau selon la revendication 59, dans lequel :
la requête d'une identification comprend la requête par le biais dudit système intermédiaire de réseau (67) d'une identification provenant dudit utilisateur connecté au niveau d'un port spécifique et la réception au niveau dudit système intermédiaire de réseau (67) de ladite identification provenant dudit utilisateur ;
l'utilisation de ladite identification pour déterminer une clé de chiffrement publique pour ledit utilisateur comprend l'utilisation à partir dudit système intermédiaire de réseau de ladite identification ;
la présentation de ladite demande d'accès comprend la présentation de ladite demande d'accès provenant dudit système intermédiaire de réseau (67) ;
la réception dudit utilisateur d'une réponse à ladite demande d'accès comprend la réception dudit utilisateur au niveau dudit système intermédiaire de réseau (67) d'une réponse et ladite clé privée est fournie par ledit utilisateur ;
la vérification de ladite réponse en réalisant une opération comprend la vérification par le biais dudit système intermédiaire de réseau (67) de ladite réponse en réalisant une opération de traitement sur ladite réponse et ladite demande d'accès en utilisant ladite clé publique associée audit utilisateur ; et
l'authentification dudit utilisateur comprend l'authentification dudit utilisateur par le biais dudit système intermédiaire de réseau (67),
et ledit processus d'authentification (89) comprend en outre :
le calcul d'une réponse au niveau d'un système terminal physiquement identifié (500a à d) à partir de ladite demande d'accès, ladite réponse nécessitant un utilisateur de fournir une clé privée au niveau dudit système terminal (500a à d), dans lequel ledit calcul nécessite un utilisateur humain de fournir au niveau dudit système terminal (500a à d) une clé privée qui est stockée sur un dispositif physique qui doit être présent au niveau dudit système terminal (500a à d).

61. Réseau selon la revendication 59 ou 60, dans lequel ladite requête comprend la requête d'une identification devant être fournie par un utilisateur, dans lequel ladite identification est capable d'être partagée avec ou de provenir d'autres routines d'ouverture de session.

62. Réseau selon la revendication 59 ou 60, dans lequel ladite requête comprend la sollicitation d'un utilisateur pour un nom d'utilisateur.

63. Réseau selon la revendication 59 ou 60, dans lequel ladite utilisation de ladite identification comprend le passage de ladite identification à un serveur de sécurité (95) pour déterminer une clé publique pour ledit utilisateur.

64. Réseau selon la revendication 59 ou 60, dans lequel ladite utilisation de ladite identification comprend l'utilisation de ladite identification pour consulter un certificat et le décodage de ce certificat pour déterminer une clé publique pour ledit utilisateur.

65. Réseau selon la revendication 64, dans lequel ledit certificat est consulté dans une table stockée dans une première ressource de réseau et ledit certificat est décodé par le biais d'une seconde ressource de réseau.

66. Réseau selon la revendication 59 ou 60, dans lequel ladite utilisation de ladite identification comprend la transmission d'une identification à un serveur de répertoire (52g), ledit serveur de répertoire (52g) récupérant un chemin de certification qui correspond à ladite identification et renvoyant ledit chemin de certification.

67. Réseau selon la revendication 66, dans lequel ladite identification est transmise depuis ledit système intermédiaire de réseau (67) et ledit chemin de certification est renvoyé vers ledit système intermédiaire de réseau (67).

68. Réseau selon la revendication 59, dans lequel lesdits moyens pour effectuer un processus d'authentification (89) sont en outre adaptés à :
calculer une réponse au niveau d'un système terminal (500a à d) à partir de ladite demande d'accès, ladite réponse nécessitant un utilisateur de fournir une clé privée au niveau d'un système terminal (500a à d), dans lequel ledit calcul comprend l'utilisation d'une clé privée pour ledit utilisateur et d'un algorithme de chiffrement à clé publique/clé privée pour générer ladite réponse.

69. Réseau selon la revendication 59 ou 60, dans lequel ladite génération d'une demande d'accès comprend la génération d'un nombre aléatoire.

70. Réseau selon la revendication 59 ou 60, dans lequel ladite génération d'une demande d'accès comprend l'utilisation de ladite clé publique et dudit algorithme de chiffrement à clé publique/clé privée pour générer ladite demande d'accès en cryptant un message, ladite demande d'accès comprenant ledit message crypté.

71. Réseau selon la revendication 59 ou 60, dans lequel ladite génération d'une demande d'accès est réalisée par un serveur de sécurité (95).

72. Réseau selon la revendication 59 ou 60, dans lequel ladite vérification comprend le décryptage de ladite réponse en utilisant ladite clé publique et la comparaison du résultat à ladite demande d'accès.

73. Réseau selon la revendication 72, dans lequel ledit décryptage de ladite réponse est réalisé par un serveur de sécurité (95).

74. Réseau selon la revendication 59 ou 60, dans lequel ladite étape d'utilisation de ladite identification comprend la transmission d'une identification provenant dudit système intermédiaire de réseau (67) à un serveur de répertoire (52g), ledit serveur de répertoire (52g) récupérant un certificat qui correspond à ladite identification et renvoyant ledit certificat audit système intermédiaire de réseau (67).

75. Réseau selon la revendication 59 ou 60, dans lequel ladite étape de calcul comprend l'utilisation d'une clé privée pour ledit utilisateur et d'un algorithme de chiffrement à clé publique/clé privée pour générer ladite réponse.

76. Réseau selon la revendication 59 ou 60, dans lequel le processus d'authentification (89) comprend en outre le filtrage de données de réseau vers et en provenance dudit port arbitraire (80a à d) en fonction du statut d'authentification de l'utilisateur au niveau de ce port (80a à d).

77. Réseau selon la revendication 59 ou 60, dans lequel l'étape de vérification comprend la comparaison de ladite réponse à une réponse attendue au niveau dudit système intermédiaire de réseau (67) en utilisant un moteur de comparaison rapide.

78. Réseau selon la revendication 59 ou 60, dans lequel ladite étape de vérification comprend le décryptage de ladite réponse en utilisant ladite clé publique et la comparaison du résultat à ladite demande d'accès.

79. Réseau selon la revendication 55, 56 ou 57, dans lequel ledit réseau est un réseau local.

80. Procédé selon la revendication 1, 2, 3, 4, 5 ou 6, dans lequel ladite étape d'authentification d'un port (80a à d) comprend la réception de données de vérification d'utilisateur provenant dudit port (80a à d) et la vérification desdites données de vérification, et dans lequel ladite étape de détection comprend la détection de la reprise du signal de liaison sur un port (80a à d).

81. Procédé selon la revendication 80, dans lequel ladite étape de vérification comprend la transmission de données de vérification à un serveur d'ouverture de session (64) sur ledit réseau et la réception d'une confirmation provenant dudit serveur d'ouverture de session (64).

82. Procédé selon la revendication 80, dans lequel ladite étape de vérification comprend la présentation d'une demande d'accès sur ledit port (80a à d) demandant que ledit port (80a à d) fournisse une valeur secrète qui serait uniquement connue d'un utilisateur autorisé.

83. Procédé selon la revendication 80, dans lequel, après vérification sur ledit port (80a à d), des données de vérification sont utilisées par un système d'exploitation sur ledit système terminal (500a à d) pour vérifier un utilisateur vers d'autres ressources de réseau.

84. Procédé selon la revendication 1, 2, 3 ou 4, dans lequel ledit système intermédiaire (67) permet à une quantité limitée de données d'être transmises et reçues sur un port (80a à d) avant authentification de ce port (80a à d).

85. Procédé selon la revendication 1, 2, 3 ou 4, comprenant en outre la limitation de transmission de données avec un port non authentifié (80a à d) vers un sous-ensemble d'autres ports (80a à d) qui sont des ports non protégés désignés (80a à d).

86. Support lisible par ordinateur (717) contenant un code de programme informatique qui, lorsqu'il est chargé dans un système intermédiaire de réseau (67) configuré de manière appropriée et exécuté, provoquera la réalisation par le système intermédiaire de réseau (67) du procédé selon l'une quelconque des revendications 1 à 29 et des revendications 80 à 85.
